(19) Europäisches Patentamt
European Patent Office
Office européen des brevets

(11) **EP 3 435 228 B1**

(12) **EUROPEAN PATENT SPECIFICATION**

(45) Date of publication and mention
of the grant of the patent:
**14.08.2024   Bulletin 2024/33**

(51) International Patent Classification (IPC):
*G06F 9/451* (2018.01)       *G06F 8/38* (2018.01)
*G06F 8/34* (2018.01)       *G06F 8/20* (2018.01)

(21) Application number: **18169694.9**

(52) Cooperative Patent Classification (CPC):
**G06F 9/451; G06F 8/34; G06F 8/38;** G06F 8/20

(22) Date of filing: **27.04.2018**

(54) **MERGING APPLICATIONS**

ZUSAMMENFÜHRUNG VON ANWENDUNGEN

APPLICATIONS DE FUSION

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**

(30) Priority:  **28.07.2017   US 201762538482 P
28.07.2017   US 201762538497 P
30.11.2017   US 201715827147
30.11.2017   US 201715827185**

(43) Date of publication of application:
**30.01.2019   Bulletin 2019/05**

(73) Proprietor: **SAP SE
69190 Walldorf (DE)**

(72) Inventors:
• **Donchev, Slavin
69190 Walldorf (DE)**
• **Latzina, Markus
69190 Walldorf (DE)**

(74) Representative: **Müller-Boré & Partner
Patentanwälte PartG mbB
Friedenheimer Brücke 21
80639 München (DE)**

(56) References cited:
**US-A1- 2010 223 594    US-A1- 2012 317 590
US-A1- 2014 026 095**

**Description**

FIELD

The present application describes ways in which a user may access application functionality. In particular, some embodiments describe systems and methods to merge multiple applications.

BACKGROUND

Unless otherwise indicated herein, the approaches described in this section are not prior art to the claims in this application and are not admitted to be prior art by inclusion in this section.

The Model-View-Controller (MVC) software architecture has been the predominant approach to building modern desktop and, subsequently, web applications. The MVC approach provides benefits compared to previous software architecture approaches, for example decoupling Model, View, and Controller objects associated with the MVC approach to allow a more flexible and reusable user interface (UI) design, as defined through the View object. However, despite an increase in flexibility and reusability of UI design templates (or, UI patterns, UI elements, and UI controls) as part of the View object, a particular limitation exists between design-time and runtime environments for applications developed under the MVC approach (referred to as "packaged applications"). Namely, at runtime, an end user's capability to perform dynamic adaptations of a packaged application for specific task needs is limited.

During design-time, the View and Controller objects typically need to be selected and firmly bound to the Model object (that is, an application object) to define a packaged application, including the packaged application's presentation, functional scope, and user interaction capabilities. During runtime, in principle, users can perform their tasks only within the scope of the definitional limits of the packaged application as specified and implemented at design-time. At runtime under the MVC approach, user options to make modifications to a packaged application (for example, to the mentioned presentation, functional scope, and user interaction capabilities) are constrained to exposed configuration options that are bounded by definitional limits preconceived and implemented at design-time.

The ability of an end user ("user") to perform user-driven configuration or adaptation of an executable software application ("app") at runtime under current software architectural patterns (for example, Model-View-Controller (MVC)) is typically very limited, creating a gap between desired configurations or adaptations to an app and an ability to perform them.. For example, configuration or adaptation changes (such as, to functional scope, look and feel as part of visual appearance, and interaction capabilities) are often supported through dialog elements that are separate from the user interface (UI) of the app a user wishes to configure/adapt. In order to use such a dialog, the user much locate, open, and work through the dialog's interface. In desktop-type apps, it is very common that provided configuration UIs are located in a separate app section for example, labeled as "Extras", "Options", "Properties", and the like). For web- or cloud-based apps (for example, executed in a web browser), separate app sections are normally not provided, as, in principle, users should not be bothered with configuration or adaptation of web-based apps with separate dialogs, screens, and the like. Regardless of whether an app is for a desktop or web-based, common configuration options are typically separated from the actual app. As a result, necessary actions to perform a desired configuration or adaptation change to an app can be difficult to discern, inefficient, and tedious for a user.

Behaviors may facilitate modification of executable application functionality. In particular, executable applications may include one or more user interface elements for use with a behavior. Behaviors may be applicable to multiple executable applications.

An executable software application can let a user perform various functions. For example, a searching application may let a user define one or more search conditions and return a set of items or objects that satisfy those conditions (*e.g.*, a set of file names created on a certain date, having a certain file size, *etc.*). Moreover, different types of applications may have different behaviors. For example, some applications may let a user group or otherwise connect items, annotate items, add or delete items, *etc.* In some cases, a user may need to utilize functionalities of more than one type of application to perform a task. For example, he or she might need to use one application to determine a list of customers who meet particular criteria (e.g., based on home addresses, demographic information, *etc.*). The user might then need to use a different application to create a series of forms for each of those customers.

It can be difficult, however, for a user to transfer results from one application to another application. For example, he or she might need to export data from one application in accordance with a standardized protocol and then import that data into another application for further processing. Such an approach can be a time consuming and error-prone task - especially when a substantial number of objects or items might need to be transferred. Moreover, it can be difficult for users and administrators to understand the many different ways of moving data between applications (*e.g.*, in some situations a user might have access to hundreds of different applications, each being associated with various input and/or output data formats).

It may therefore be desirable to provide systems and methods to facilitate the merging of functionality of multiple applications into a single application in an efficient and flexible manner.

US 2014/0026095 (Dreiling) describes a widget composition platform, in which code is generated based on receiving a selection of a first service and a widget engine via the web-based widget composition platform. The code, when invoked by the selected widget engine, implementing a widget that is operable to communicate with the first service.

US 2012/317590 (Chae) describes merger of applications in a portable terminal including selecting a basic application and an additional application by a user; obtaining information of the additional application; and performing a function of the additional application using the basic application and using the information of the additional application.

US 2010/223594 (Kartavov) describes a method for generating a composed control. The method comprises selecting functional modules, coupling the selected functional modules to a core control, and generating scripted code that, when executed, implements the functionality of the core control and selected functional modules.

SUMMARY

The invention relates to a method, a system and a computer program product, as set out in the appended claims.

A system, method, and computer program product are provided to facilitate ways in which functionality of multiple applications is merged into a single application in an efficient and flexible manner. The system comprises a communication port to exchange information with a user via a graphical user interface. The system further comprises a merging platform, coupled to the communication port. The merging platform includes a memory storing processor-executable program code, and a computer processor to execute the processor-executable program code in order to cause the merging platform to receive, via the graphical user interface, a selection of a first executable application, and receive, via the graphical user interface, a selection of a second executable application. Each of the executable applications includes at least one user interface element, at least one behavior corresponding to the user interface element, at least one input parameter, and at least one output parameter. Each user interface element is implemented using a user interface element class. Each corresponding behavior is implemented as a subclass that extends the user interface element class. Each corresponding behavior affects a voice interface, a haptic interface, a style attribute affecting display of the corresponding user interface element, or a style attribute affecting data displayed in the corresponding user interface element. Each behavior includes an identifier and one or more methods, wherein each method has a method signature and a version number. The computer processor is further to cause the merging platform to determine whether the applications represent a valid combination, comprising, determining whether the number of outputs of the first application falls within a range for the number of inputs accepted by the second application. When the applications represent a valid combination, the computer processor is further to cause the merging platform to merge components of the first executable application and the second executable application to create a merged application. The components include the behaviors. The merged application includes a union of the behaviors, such that the merged application includes the behaviors of the second application and the behaviors of the first application. When a behavior of the second application has the same method signature and a version number greater than or equal to a version number of a behavior of the first application, the behavior of the second application overrides the behavior of the first application in the merged application. The computer processor is further to cause the merging platform to arrange to facilitate execution of the merged application.

An application data store may contain information about executable applications, including input data and output data associated with each executable application. The first executable application may be in the application data store. The second executable application may be in the application data store. The merging platform may receive an indication from the user that an application merging application is to be triggered. The application merging application may be part of the merging platform.

In some cases, at least one selection received from the user includes a graphical drag-and-drop operation of a graphical representation of an executable application into a merging display placeholder area.

Arranging to facilitate execution of the merged application may be associated with at least one of: (i) arranging for the merged application to be executed via the graphical user interface; (ii) saving a copy of the merged application, and (iii) transmitting information about the merged application to be executed by another user.

At least one of the first and second executable applications may be associated with at least one of: (i) a searching application, (ii) a mapping application, (iii) a grouping application, (iv) a comparing application, (v) a business application, (vi) a geographic map application, (vii) an inventory application, (viii) a human resources application, (ix) a manufacturing application, (x) a form-based application, and (xi) a communication application.

Merging may be a runtime operation.

In some cases, execution of the processor-executable program code further cause the merging platform to initiate a naming operation to assign a name to the merged application.

The naming operation may be one of: (i) an automatic naming operation, and (ii) a manual naming operation where the user defines the name for the merged application.

In some cases, at least one of the first and second executable applications was not created at design time in accordance with the merging platform.

The communication port may exchange information with a user through a remote user device via a distributed communication network.

The method comprises receiving, via a graphical user interface, a selection of a first executable application. The method further comprises receiving, via the graphical user interface, a selection of a second executable application. Each of the executable applications includes at least one user interface element, at least one behavior corresponding to the user interface element, at least one input parameter, and at least one output parameter. Each user interface element is implemented using a user interface element class. Each corresponding behavior is implemented as a subclass that extends the user interface element class. Each corresponding behavior affects a voice interface, a haptic interface, a style attribute affecting display of the corresponding user interface element, or a style attribute affecting data displayed in the corresponding user interface element. Each behavior includes an identifier and one or more methods, wherein each method has a method signature and a version number. The method further comprises determining whether the applications represent a valid combination, comprising, determining whether the number of outputs of the first application falls within a range for the number of inputs accepted by the second application. When the applications represent a valid combination, the method further comprises merging components of the first executable application and the second executable application to create a merged application. The components include the behaviors. The merged application includes a union of the behaviors, such that the merged application includes the behaviors of the second application and the behaviors of the first application. When a behavior of the second application has the same method signature and a version number greater than or equal to a version number of a behavior of the first application, the behavior of the second application overrides the behavior of the first application in the merged application. The method further comprises arranging to facilitate execution of the merged application.

The first executable application may be in an application data store, the application data store containing information about a plurality of executable applications, including input data and output data associated with each executable application. The second executable application may be in the application data store). The method may further comprise receiving an indication from the user that an application merging application is to be triggered.

In some cases, merging is further associated with a third executable application in the application data store.

The second executable application may be a merged application associated with two other executable applications.

The method may further comprise receiving from the user a trigger to separate the merged application. The method may further comprise responsive to the trigger, recreating the first and second executable applications.

Registering a behavior with an executable application may comprise passing a user interface class corresponding to the behavior (e.g., the defined user interface class) to a register function.

At design time, a behavior (e.g., a Use Logic Entity - ULE) and a user interface element (e.g., a ULE Configuration Element - UCE) may be defined for a particular context (such as a user interface element in an executable application of a dynamic web page). At run time, the defined ULE and UCE may be placed into the particular context. The defined ULE and UCE may be rendered within an executable application (e.g., including a user interface) associated with the particular context. An event (e.g., a user interface manipulation event) associated with either the ULE or the UCE is received, and the user interface may be configured based upon the received event.

The method may further comprise, at design time, defining a ULE and a UCE for a context (e.g., a particular context). The method may further comprise, at run time, placing the defined ULE and UCE into the particular context, and rendering the defined ULE and UCE within a graphical user interface associated with the particular context. The method may further comprise, at run time, receiving a graphical user interface manipulation event associated with either the ULE or the UCE. The method may further comprise, at run time, dynamically configuring the graphical user interface based upon at least the received graphical user interface manipulation event.

A UCE may be used to provide an interactable representation (a representation that can be interacted with) of a ULE (e.g., a particular ULE).

The context may be an executable application.

The context may include a configuration section and a user interaction section of the graphical user interface.

The UCE may be interacted with in the graphical user interface in order to implement an operation with respect a ULE (e.g., the particular ULE).

The UCE may be interacted with in the configuration section of the graphical user interface.

The ULE may be interacted with in the user interaction section of the graphical user interface.

Subject matter described herein can be implemented in particular implementations, so as to realize one or more of the following advantages. First, with described approaches, a user is permitted to perform user-driven configuration or adaptation of an application at runtime. Users are not bothered with configuration or adaptation of apps using separate dialogs or screens, but can make changes directly within the app while in use. Second, if a user decides to choose and interact with data types or attributes for which the app was not initially designed for, the user is not necessarily limited in configuration capabilities with respect to the data types or attributes. ULEs, which are embodiments of app use logic, permit direct interaction by users and enable seamless app configuration to be embedded within the app itself. Third, intuitive user understanding is provided through immediate feedback of effects of manipulating one or more ULEs with respect to an app or apps. Users are allowed to create and benefit from directly configuring apps, during use, in powerful and innovative ways. Fourth, principles of machine learning can be applied to the concept of ULEs and the handling of ULEs at the level of a user interaction at a UI level. Through the integration of the principles of machine learning, an app can be dynamically adapted to use data types or objects which were not anticipated or planned for by software engineers.

Implementations described herein may be implemented via a computer-implemented method; a (possibly non-transitory) computer-readable medium storing computer-readable instructions to perform the computer-implemented method; and a computer-implemented system comprising a computer memory interoperably coupled with a hardware processor configured to perform the computer-implemented method/the instructions stored on the computer-readable medium.

Technical effects of some embodiments of the invention are improved and computerized ways to facilitate ways in which functionality of multiple applications may be automatically merged into a single application in an efficient and flexible manner.

In addition, one or more of the following advantages may be realized.

First, at runtime the described approach does not limit end user modifications of an application to within the scope of definitional limits of the application as specified and implemented at design-time as in the MVC software architecture. Instead, described approaches permit, with respect to both design-time and runtime perspectives, the creation and use of dynamically-configurable applications, where end users are permitted to make dynamic modifications to presentation, functional scope, and user interaction capabilities of a dynamically-configurable application.

Second, permitting end users to make dynamic modifications to an application helps to mitigate the need for highly-complex and cost-intensive modifications typically seen with applications developed under the MVC approach.

Third, typically required scheduling/planning for MVC-type application modifications can be mitigated or eliminated for the end user.

Fourth, the need for End User Development (EUD) can also be mitigated or eliminated with the use of dynamically-configurable applications.

Fifth, the described approach uses behaviors following a specific programming model that are defined and combined in order to implement a dynamically configurable application. More particularly, rather than providing a new application or rewriting the code of an existing application, granular behaviors could be distributed, e.g., in packages grouping behaviors with similar functionality. This may lead to higher efficiency and greater productivity.

Sixth, behaviors are defined as embodiments of user interaction capabilities, which support principles of elasticity (that is, UI or task objects can be manipulated by end users in an adaptive manner which is context-responsive). In other words, behaviors embody capabilities for dynamic and context-responsive user interactions at runtime. From the runtime perspective, end users are permitted to interact with and to manipulate behaviors in order to dynamically adapt a particular application to their current task needs. Accordingly, the use of behaviors allows for a highly-individualized and adaptable applications.

Seventh, the described approach permits better separation of concepts and reusability in comparison to a standard MVC framework.

With these and other advantages and features that will become hereinafter apparent, a more complete understanding of the nature of the invention can be obtained by referring to the following detailed description and to the drawings appended hereto.


BRIEF DESCRIPTION OF THE DRAWINGS

FIG. 1 illustrates an example of a searching application.

FIG. 2 illustrates an example of a mapping application.

FIG. 3 is a high level block diagram of a computer system in accordance with some embodiments.

FIG. 4 is a flow diagram of a method according to some embodiments.

FIG. 5 through 7 illustrate the use of a graphical user interface to create a merged application according to some embodiments.

FIGS. 8 through 11 illustrate use of a merged application accordance with some embodiments.

FIG. 12 is a high level diagram of an apparatus or platform in accordance with some embodiments.

FIG. 13 is a portion of a merging database that might be provided according to some embodiments.

FIG. 14 is a more detailed process diagram example in accordance with some embodiments.

FIG. 15 is another process diagram in accordance with some embodiments.

FIG. 16 illustrates a tablet or handheld computer being used according to some embodiments.

FIG. 17 is a block diagram illustrating a behavior-based application Framework (BAF), according to an implementation of the present disclosure.

FIGS. 18A-18C are screenshots of an example software application illustrating an example use of behaviors in a user interface, according to an implementation of the present disclosure.

FIG. 19 is a block diagram of a behavior Library class and instantiated behavior instances, according to an implementation of the present disclosure.

FIG. 20 is a block diagram illustrating movement of behaviors between applications, according to an implementation of the present disclosure.

FIGS. 21A-21C are screenshots illustrating an example definition of a behavior in a webpage UI, according to an implementation of the present disclosure.

FIG. 22 is a flowchart of an example method for building and using behavior-based applications, according to an implementation of the present disclosure.

FIG. 23 is a block diagram illustrating an example computer system used to provide computational functionalities associated with described algorithms, methods, functions, processes, flows, and procedures according to an implementation of the present disclosure.

FIGS. 24A & 24B are block diagrams illustrating removal of a ULE from an App, according to an implementation of the present disclosure.

FIG. 25 is a block diagram illustrating example options for transferring a ULE to an App, according to an implementation of the present disclosure.

FIG. 26 is a block diagram illustrating a completed transfer of a ULE from App B to App A of FIG. 25, according to an implementation of the present disclosure.

FIG. 27 is a flowchart of an example method for easy and flexible, user-directed configuration of applications during runtime, according to an implementation of the present disclosure.

DETAILED DESCRIPTION

The following description is provided to enable any person skilled in the art to make and use the described embodiments and sets forth the best mode contemplated for carrying out some embodiments. Techniques for merging applications including at least one behavior (also referred to as behavior-based applications) are described. Various modifications, alterations, and permutations of the disclosed implementations can be made and will be readily apparent to those or ordinary skill in the art, and the general principles defined may be applied to other implementations and applications, without departing from scope of the disclosure. In some instances, details unnecessary to obtain an understanding of the described subject matter may be omitted so as to not obscure one or more described implementations with unnecessary detail and inasmuch as such details are within the skill of one of ordinary skill in the art. The present disclosure is not intended to be limited to the described or illustrated implementations, but to be accorded the widest scope consistent with the described principles and features.

The Model-View-Controller (MVC) software architecture has been the predominant approach to building modem desktop and, subsequently, web applications. The MVC approach provides benefits compared to previous software architecture approaches, for example decoupling Model, View, and Controller objects associated with the MVC approach to allow a more flexible and reusable user interface (VI) design, as defined through the View object. However, despite an increase in flexibility and reusability of UI design templates (or, UI patterns, UI elements, and UI controls) as part of the View object, a particular limitation exists between design-time and runtime environments for applications developed under the MVC approach (referred to as "packaged applications"). Namely, at runtime, an end user's capability to perform dynamic adaptations of a packaged application for specific task needs is limited.

The ability of an end user ("user") to perform user-driven configuration or adaptation of an executable application ("App") at runtime under current software architectural patterns (for example, Model-View-Controller (MVC)) is typically limited, creating a gap between desired configurations or adaptations to an App and an ability to perform them. For example, configuration or adaptation changes (such as, to functional scope, look and feel as part of visual appearance, and interaction capabilities) are often supported through dialog elements that are separate from the user interface (UI) of the App a user wishes to configure/adapt. In order to use such a dialog, the user must locate, open, and work through the dialog's interface. In desktop-type Apps, it is common that provided configuration UIs are located in a separate App section for example, labeled as "Extras", "Options", "Properties", and the like). For web- or cloud-based Apps (for example, executed in a web browser), separate App sections are normally not provided, as, in principle, users should not be bothered with configuration or adaptation of web-based Apps with separate dialogs, screens, and the like. Regardless of whether an App is for a desktop or web-based, common configuration options are typically separated from the actual App. As a result, necessary actions to perform a desired configuration or adaptation change to an App can be difficult to discern, inefficient, and tedious for a user.

One reason for the described gap can include a lack of mapping of mapping configuration parameters to an App (or parts of the App) in a direct and easy-to-comprehend manner. For example, the lack of mapping can occur in at least two ways: 1) configuration parameters may be laid out differently when compared to an App UI layout including an arrangement of various UI elements and controls and 2) configuration attributes may be defined and labeled in ways which make it difficult for users to understand a relationship to any App parts or attributes on a UI level or during an actual UI interaction. Another reason for the described gap arises from the fact that software engineers - as in the example of modem web Apps - might not have included configuration options, or only configuration options for a limited subset of App attributes.

Configuration options are also typically confined by data or a database model around which an App was designed. As a result, if a user decides to choose and interact with data types or attributes for which the App was not designed for, the user is necessarily limited in configuration capabilities with respect to the data types or attributes. While, in principle, conventional configuration capabilities can be configured to include options to define unplanned for data and how to use it with an App, the provided options might not be sufficiently comprehensive or flexible. In fact, interactions with the App for the user would mimic typical App definition actions by software engineers during the design phase of the App.

During design-time, the View and Controller objects typically need to be selected and firmly bound to the Model object (that is, an application object) to define a packaged application, including the packaged application's presentation, functional scope, and user interaction capabilities. During runtime, in principle, users can perform their tasks only within the scope of the definitional limits of the packaged application as specified and implemented at design-time. At runtime under the MVC approach, user options to make modifications to a packaged application (for example, to the mentioned presentation, functional scope, and user interaction capabilities) are constrained to exposed configuration options that are bounded by definitional limits preconceived and implemented at design-time.

For example, even though a UI might permit configuration options for runtime adaptions (such as, UI color, presented UI elements, functionality, and user modes), the configuration options still remain within the constraints of flexibly switching ON or OFF packaged application parts, or parameters or in flexibly recombining existing packaged application parts, or parameters. However, each part or parameter remains consistent in presentation, functional scope, and user interaction as defined at design-time.

When end users encounter functional limitations that cannot be overcome by runtime configuration changes, typical practice results in a request made to packaged application designers/engineers to modify the packaged application with desired changes. As modification of packaged applications can be a highly complex and cost-intensive effort, updates to packaged applications are normally highly scheduled/planned activities, which can require end users to wait for long periods of time before requested changes to a packaged application are available for use. In addition, designers/engineers might not be available, e.g., due to expiration of a support contract or because a license agreement does not include support. While End User Development (EUD) allows end users to engage in design-time work to make modifications to packaged applications outside of typical packaged application scheduling/timeframes, EUD is highly dependent upon skill and availability of end users to make requested changes to a packaged application. EUD activities can also result in inconsistent or flawed code unless submitted software changes are properly monitored/evaluated before being made available to general end users.

Described is a software architecture that removes the previously-described particular limitation of packaged applications and provides a concept of application "elasticity." The described software architecture permits, with respect to both design-time and runtime perspectives, the creation and use of dynamically-configurable applications (sometimes referred to as "elastic applications") in presentation, functional scope, and user interaction capabilities. While this disclosure focuses generally on web-type applications for examples, as will be apparent to those of ordinary skill in the art, the described concepts can be applied to other application types. Accordingly, other application types consistent with the concepts presented in this disclosure are considered to be within the scope of this disclosure.

A behavior may be a software entity following a programming model. For example, a behavior may be implemented as a subclass that can extend a user interface element class (i.e., a class implementing a user interface element). Behaviors may be associated with each element of a UI where elastic behavior is desired. For example, when a UI element is implemented using a class (e.g., the user interface element class HTMLElement), a corresponding behavior may be implemented as a subclass extending the UI element class, e.g., via "class Behavior extends HTMLElement" in JavaScript. In this way, each UI element implemented using class HTMLElement includes associated behavior functionality. In addition to the class, the UI element may be implemented using markup text, e.g., HTML.

The behavior may be defined by specified characteristics. For example, the behavior may be used to modify a user interface or front end of an application. The behavior may modify various aspects of the user interface including output (e.g., format or style of text displayed on a graphical user interface), and/or input (e.g., tactile input, text entry, input received via a pointing device). The behavior may have features in common with a microservice. In particular, the behavior may be flexible, loosely coupled and easy to deploy.

From a design-time perspective, behaviors can be defined and combined in order to implement an executable application (that is, an elastic application or a behavior-based application), at least in terms of a default value for the application; the default value can be dynamically modified by a user (e.g., an end user) at runtime. From a runtime perspective, end users are permitted to interact with and to manipulate behaviors in order to dynamically adapt a particular application (e.g., an elastic application) to their current task needs. The use of behaviors allows for a highly-individualized and adaptive application.

Behaviors may be defined as embodiments of user interaction capabilities, which support principles of elasticity (that is, UI or task objects can be manipulated by end users in an adaptive manner which is context-responsive). In other words, behaviors embody capabilities for dynamic and context-responsive user interactions at runtime.

At a high-level, to implement behaviors which are effective at runtime, functions may be applied to data in a contextually-adaptive, dynamic manner. Specifically, end users may have options to dynamically attach or detach particular behaviors during use with respect to a particular context (for example, an application or at least one UI element of the application). Consequently, functions which are entailed with a particular behavior are activated or deactivated, respectively. Defining behaviors in terms of functional units fulfills an elasticity requirement during runtime, resulting in elastic applications.

Also described is the provision of easy and flexible user-directed configuration of Apps during runtime for a given App (for example, an App executing in a web browser). At a UI level where users interact with the App (or parts of the App), the App includes behaviors that may be implemented as Use Logic Entities (ULE). A ULE is an embodiment of App use logic. A ULE is defined by a particular form and potential for user interaction in an associated App. For example, ULEs (i.e., behaviors) might include App use logic directed to graphing, reordering, simple visualization, forced UI layouts, and connecting UI elements within the associated App.

The App may be designed in such a way that a ULE is represented at the level of the App UI for direct manipulation by users. In this way, the user is equipped with a handle to modify appearance and behavior of the App (for example, by switching ON and OFF individual ULEs, adding/removing ULEs, and associated actions). In particular, the user can modify style attributes, choose displayed fields or control the order of displayed fields via ULEs (i.e., behaviors). Switching ON and OFF may be understood as a possible way of adding or removing behaviors from an application. For example, a catalog of behaviors may be displayed for each application, and each behavior in the catalog can be switched ON or OFF.

The ULEs and their description as elements for user interaction constitute a type of self-representation (or "self-description") with respect to the App that can be exposed for user interaction. Practically, ULEs can be represented in a dedicated area of the UI. This representation exposes clearly which ULE features are applicable to a particular App, and permits intuitive user understanding through immediate feedback of the effects of manipulating one or more ULEs (for example, adding or removing a ULE from an App). In an example, a ULE (i.e., a behavior) enabling reordering of a list could be represented on a UI as a UI widget that can be dragged and dropped into the App UI to permit addition of the reordering (i.e., sorting-type functionality) into the App. Similarly, dragging the ULE out of the App, removes the reordering functionality from the App.

Users are able to benefit from prior experience using a number of Apps and their associated interaction capabilities (for example, rendering and interaction functionality). Assume that users have gained some proficiency with interacting with ULEs associated with Apps A, B, and C. Now, when starting to work with a new App, D, users can appreciate particular ULEs which they have previously encountered when working with the Apps A, B, or C. Subsequently, given that ULEs can be easily transferred across Apps, users could choose to drag-and-drop/copy-and-paste (or similar functionality) a particular ULE, M, from App A, B, or C into App D.

As a result, App D can be seamlessly reconfigured "on-the-fly," so to speak. As a result, App D would now include the added ULE M, as part of its actual App scope. Enabling users to configure Apps in this manner allows configuration functionalities to be leveraged to an unprecedented level. Users are allowed to create and benefit from directly configuring Apps, during use at runtime, in powerful and innovative ways.

In some implementations, JAVASCRIPT technologies are used through a web browser to operate on Document Object Models (DOM) commonly available for webpages. While this disclosure focuses generally on JAVASCRIPT technologies (for example, using the standardized ECMAScript language under ECMA-262 and ISO/IEC 16262), as will be apparent to those of ordinary skill in the art, the described concepts can be realized using different language or other technologies. In particular, other client side scripting languages (e.g., ActionScript) for dynamic web pages may be used. In addition a language providing a combination of client-side and server side scripting (e.g., Ajax) may also be used.

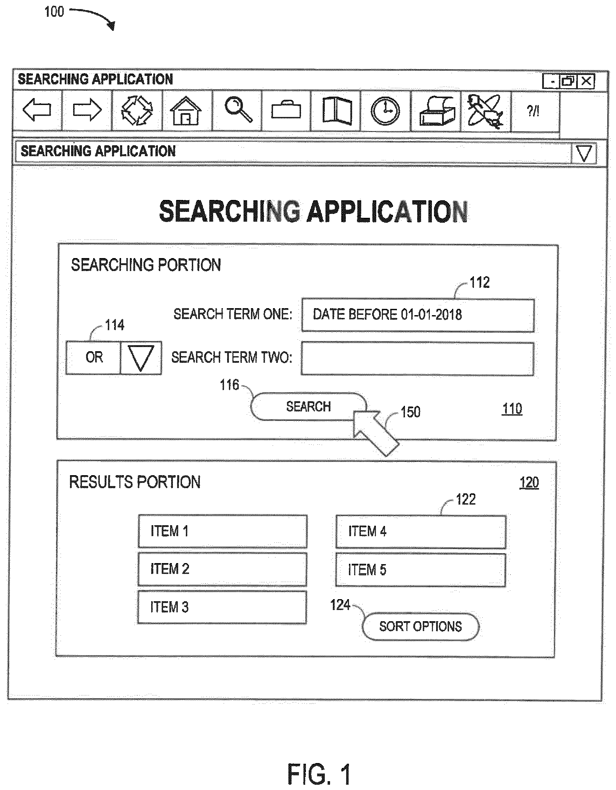

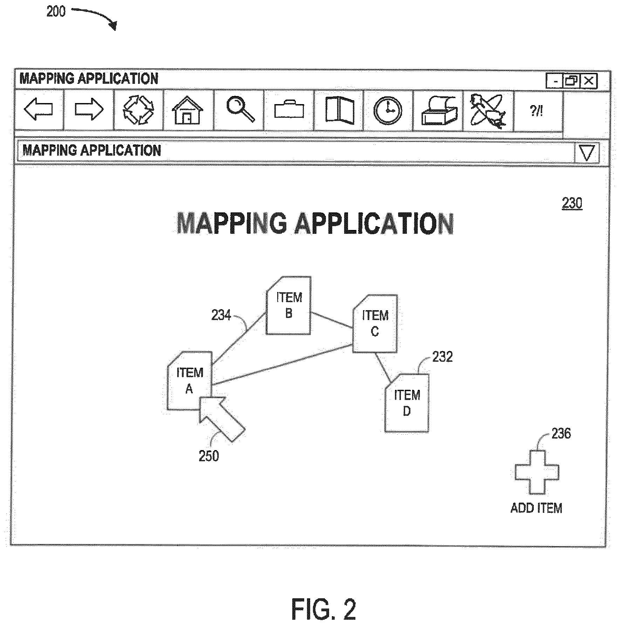

Executable software applications may let a user perform various functions. For example, FIG. 1 illustrates an example of a searching application 100. The searching application 100 has a searching input portion 110 and a results portion 120. A user may enter one or more search terms 112 into the searching input portion 110 (using Boolean operations 114 is desired). He or she may then activate a "Search" icon 116 (e.g., using a computer pointer 150 and mouse click) to execute a search in accordance with the search criteria defined by those terms 112. Responsive to that activation, the search application 100 may automatically populate the results portion 120 with a list of objects, files, or items 122 that satisfy the search criteria (e.g., items 1 through 5 as illustrated in FIG. 2). Note that the results portion 120 might contain a list or table of file names, a set of graphical icons representing items, etc. In some cases, a user may further manipulate the items 122 in the results portion 120 (e.g., by sorting the items 122 in various ways with a "Sort Options" icon 124, removing items, etc.). Note that updating the search terms 112 in the searching input portion 110 might automatically update the results portion 120 with new results.

A user interface element of an application may be defined for use with at least one behavior. Multiple behaviors may be applied to the user interface element. Similarly, a single behavior may be applied to multiple user interface elements. A user interface class may defined for the behavior and registered with a user interface application. A trigger event may defined within the user interface class and may be activated when a particular event is detected by the behavior.

Note that different types of applications may have different behaviors. Moreover, a user may need to utilize behaviors and behavior functionalities of more than one type of application to perform a task. Consider, for example, FIG. 2 which illustrates an example of a mapping application 200. The mapping application 200 including a mapping area 230 that can display graphical representation of items 232 (e.g., items A though D as illustrated in FIG. 2). A user may utilize his or her computer pointer 250 to create connections or lines 234 between various items. The lines 234 might represent, for example, a particular type of relationship between the connected items 232 (e.g. with items A and B being connected, while items A and D are not connected, as illustrated by the lines 234 in FIG. 2). In some cases, a user may be able to adjust the items 232 that are included in the mapping area 230 (e.g., by deleting an item 232 or adding an item 232 using the "Add Item" icon 236). Note that in some embodiments, the lines 234 may represent directional connections (e.g., an arrowhead might be display at one end or both ends of a line 234).

In can be difficult, however, for a user to transfer results from application to another application. For example, he or she might need to export data from the searching application 100 of FIG 1 in accordance with a standardized protocol and then import that data into the mapping application 200 of FIG. 2 for further processing. Such an approach can be a time consuming and error-prone task - especially when a substantial number of objects or items might need to be transferred. Moreover, it can be difficult for users and administrators to understand the many different ways of moving data between applications (e.g., in some situations a user might have access to hundreds of different applications, each being associated with various input and/or output data formats).

It may therefore be desirable to provide systems and methods to automatically facilitate a merging of behaviors and parameters associated with multiple applications into a single merged application in an efficient and flexible manner. Merging of application behaviors may involve configuring the applications to be displayed together within a graphical user interface. The application behaviors may be a subset of the functionalities executable by the application. A used herein, the term "application" may refer to, in some cases, a program created at design time. The application may be programmed using a client-side scripting language and may include specified functionality, i.e., behaviors. In particular, the application may include behaviors implemented as callable units (e.g., modules or classes).

The behaviors affect one or more of the following:

- filtering of information displayed, i.e., which fields out of a set of available fields are displayed in a user interface element layout (e.g., a window);
- an order of displayed data (e.g., fields displayed in ascending or descending order);
- an event triggered by user interaction with a user interface element of an application (e.g., the behavior may facilitate a database query, particularly by determining which database to query in response to user input);

- a style attribute affecting display of at least one user interface element of the application (e.g., spatial dispersion of icons, icon size);
- a style attribute affecting data displayed in at least one user interface element of the application (e.g., font type, size or style, line spacing, paragraph spacing).

Behaviors also implement means of user interaction independent of a graphical user interface. A behavior affects one or more of the following:

- a voice interface (i.e., voice input and/or output),
- a haptic interface (i.e., touch input and/or output),
- augmented reality (augmentation of a physical environment via computer-generated perceptual information).

A behavior implementing a user interaction means may be embodied in an object. The object may be accessible via a control (i.e., widget) in a user interface. It may be possible to drag the control (e.g., tile) into an application to replace interaction means already in the application, or extend the application to include interaction means or further interaction means.

The application may also be programmed in a programming language that is compatible with the merging platform, e.g., a client-side scripting language such as JavaScript.

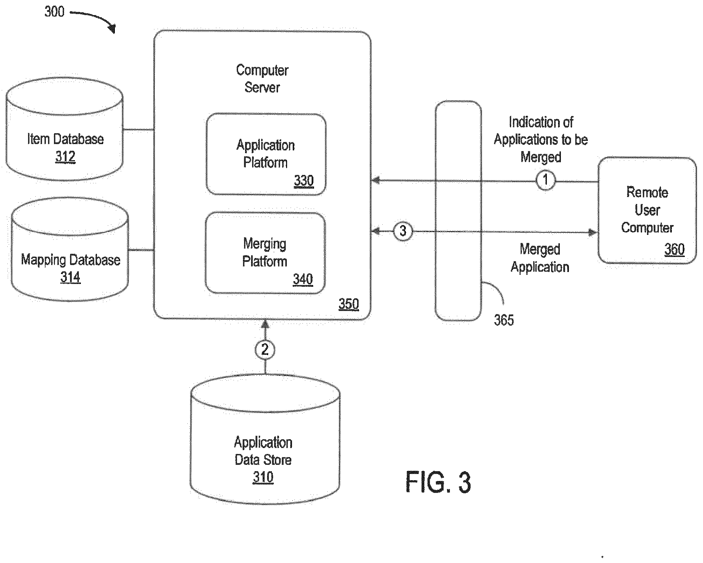

FIG. 3 is a high-level block diagram of a system 300 according to some embodiments of the present invention. In particular, the system includes an application data store 310 that provides information to a computer server 350. The application data store 310 might contain, for example, information about a plurality of executable applications, including input data and output data associated with each executable application. The computer server 350 may also exchange information with a remote user computer 360 (*e.g.*, via a firewall 365) via an application platform 330 to facilitate use of an executable application. According to some embodiments, a merging platform 340 executes at the computer server 350 to facilitate an efficient and flexible ability to merge multiple applications into a single application. According to some embodiments, the computer server 350 and/or merging platform 340 might be associated with a third-party, such as a vendor that performs a service for an enterprise.

The computer server 350 might be, for example, associated with a Personal Computer ("PC"), laptop computer, smartphone, an enterprise server, a server farm, and/or a database or similar storage devices. According to some embodiments, an "automated" or "semi-automated" computer server 350 and/or merging platform 340 may process information that is provided to the remote user computer 360. As used herein, the term "automated" may refer to, for example, actions that can be performed with little (or no) intervention by a human.

As used herein, devices, including those associated with the computer server 350 and any other device described herein may exchange information via any communication network which may be one or more of a Local Area Network ("LAN"), a Metropolitan Area Network ("MAN"), a Wide Area Network ("WAN"), a proprietary network, a Public Switched Telephone Network ("PSTN"), a Wireless application Protocol ("WAP") network, a Bluetooth network, a wireless LAN network, and/or an Internet Protocol ("IP") network such as the Internet, an intranet, or an extranet. Note that any devices described herein may communicate via one or more such communication networks.

The computer server 350 may store information into and/or retrieve information from the application data store 310. The application data store 310 might, for example, store a set of electronic records representing executable applications. The computer server 350 and/or application platform 330 may also exchange information with an item database 312 (*e.g.*, storing information that can be analyzed by a searching application such as the one described with respect to FIG. 1) and/or a mapping database 314 (*e.g.*, storing information about connections between items that might be utilized by a mapping application such as the one described with respect to FIG. 2). The application data store 310 may be locally stored or reside remote from the computer server 350. As will be described further below, the application data store 310 may be used by the computer server 350 to automatically facilitate a merging of application behaviors and parameters. Although a single computer server 350 is shown in FIG. 3, any number of such devices may be included. Moreover, various devices described herein might be combined according to embodiments of the present invention. For example, in some embodiments, the computer server 350 and application data store 310 might be co-located and/or may comprise a single apparatus.

According to some embodiments, the system 300 may facilitate a user's selection of applications in connection with a merge process via the computer server 350. For example, at (1) a user at a remote user computer 360 might select two (or more) applications and indicate that those applications should be merged. The computer server 350 and/or merging platform 340 may then access information in the application data store 310 at (2) and then combine the behaviors and parameters of those applications. The computer server 350 may then facilitate execution of this newly created, merged application by exchanging information with the remote user computer 360 at (3) for display (rendering) and/or further user interactions. Note that the merging platform 340 may, in some embodiments, tightly and seamlessly interact with existing applications such that minimal setup requirements are necessary. Instead, the merging platform 340 may work with applications, plugins, and/or other functional units so as to be available to users with minimal effort.

In some embodiments described herein, the system 300 may include applications that are released and able to run on various combinations of database systems, Operating Systems ("OSs"), virtualization layers and cloud services, such as InfraStructure as a Service ("IaaS") implementations. Moreover, embodiments might include real time analytics, interactive data exploration, and/or an application platform associated with, for example, the High-performance ANalytic Appliance ("HANA") in-memory, column-oriented, relational database management system developed and marketed by SAP SE®. Such an application platform might include, for example, an OnLine Analytical Processing ("OLAP") engine, a predictive engine, a spatial engine, application logic, a rendering platform, *etc.* A real-time data acquisition device may include landscape transformation, a replication server, and/or an event stream processor. According to some embodiments, an application platform and/or real-time data acquisition device may exchange information with transactional, analytical, online applications. An application platform may also exchange information with customer mobile applications (*e.g.*, associated with mobile platforms), a business object suite (*e.g.*, associated with exploration, reporting, dashboarding, predictive functions, and/or mobile versions), business objects data services, *etc.*

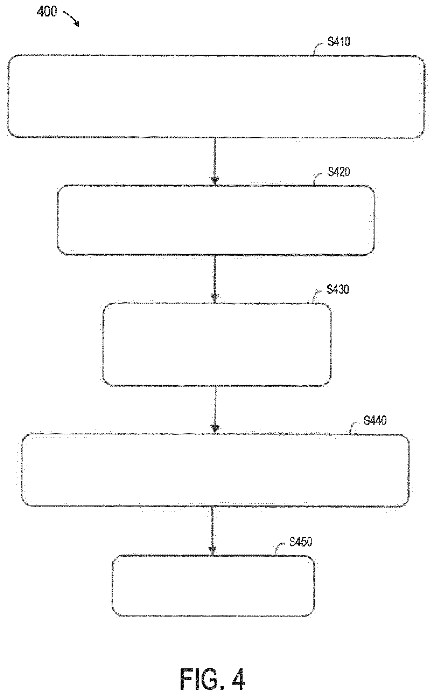

Note that the system 300 of FIG. 3 is provided only as an example, and embodiments may be associated with additional elements or units. According to some embodiments, units or parts of the system 300 automatically facilitate the merging of multiple applications for a user. FIG. 4 illustrates a method 400 that might be performed by some or all of the elements of the system 300 described with respect to FIG. 3, or any other system, according to some embodiments of the present invention. The flow charts described herein do not imply a fixed order to the steps, and embodiments of the present invention may be practiced in any order that is practicable. Note that any of the methods described herein may be performed by hardware, software, or any combination of these approaches. For example, a computer-readable storage medium may store thereon instructions that when executed by a machine result in performance according to any of the embodiments described herein.

At S410, a computer processor of a merging platform receives via a graphical user interface, a selection of a first executable application. The receiving may include recognizing that a user has selected, via the graphical user interface, a first executable application in an application data store. The application data store may contain, for example, information about a number of different executable applications, including input data (e.g., input parameters) and output data (e.g., output parameters) associated with each of those executable applications. According to some embodiments, the graphical user interface may communicate via a communication port that exchanges information with a user through a remote user device via a distributed communication network. As used herein, the term "application" may refer to many different types of executable software programs (*e.g.*, stand-alone applications, plug-ins, *etc.*)*. The application may be executable in a web browser, e.g., as part of a dynamic web page, using client-side scripting (e.g., JavaScript).

By way of example only, the application could be associated with a searching application, a mapping application, a grouping application, a comparing application, a business application, a geographic map application (*e.g.*, displaying items based on geographic location), an inventory application, a Human Resources ("HR") application (*e.g.*, associated with a payroll procedure, an Information Technology ("IT") allocation process, *etc.*), a manufacturing application, a form-based application (*e.g.*, to create paper or web-based forms), and/or a communication application (*e.g.*, to generate or facilitate email messages, telephone calls, *etc.*)*.

At S420, a selection of a second executable application is received via the graphical user interface. In particular, the system may recognize that the user has selected, via the graphical user interface, the second executable application from the application data store. Note that an application selection received from the user could include, according to some embodiments, a graphical drag-and-drop operation of a graphical representation of an executable application (*e.g.*, a display icon or file name) into a placeholder area (e.g., in a display area of the merging platform). The merging platform may provide placeholders (i.e., placeholder areas) for applications to be merged.

The first executable application and the second executable application each include at least one user interface element. For example, the first executable application may include multiple text boxes (each being a user interface element) and the second executable application may include multiple icons (each being a user interface element).

At least one (or both) user interface element may be a structural element of a graphical user interface (e.g., a window), an interaction element of a graphical user interface (e.g., a list of items on which user operations will take place) or a control element of a graphical user interface (e.g., a button or menu). The user interface element may be an HTML element (e.g., a paragraph or a link). The user interface element may be implemented using client-side scripting.

Further, the first executable application and the second executable application each includes at least one input parameter and at least one output parameter. For example, the first executable application may accept one to three input parameters via text boxes and a drop-down list. The first executable application may provide five output parameters, some of which might not contain data. The second executable application include have one to ten input parameters and a matching number of output parameters (e.g., if there are three input parameters then there are three output parameters). The input parameters may be provided via a file or a callable unit (e.g., a method call) and data of the output parameters may be displayed in icons.

At S430, the system checks whether the applications (e.g., the searching application 100 and the mapping application 200) represent a valid combination. If so, then components of the applications are merged. If the applications do not represent a valid combination, an error message may be generated and displayed, as discussed in more detail below. The check may be performed in response to an indication from the user that an application merging application is to be triggered. The merge may be carried out by merging components (e.g., behaviors) of the first executable application and the second executable application. The components may include one or more of the following:

- the input parameters of the first executable application and the second executable application,
- the output parameters of the first executable application and the second executable application,
- behaviors of the first executable application,
- behaviors of the second executable application.

In particular, the behaviors of the first executable application and the second executable application are merged to create a merged application at S440.

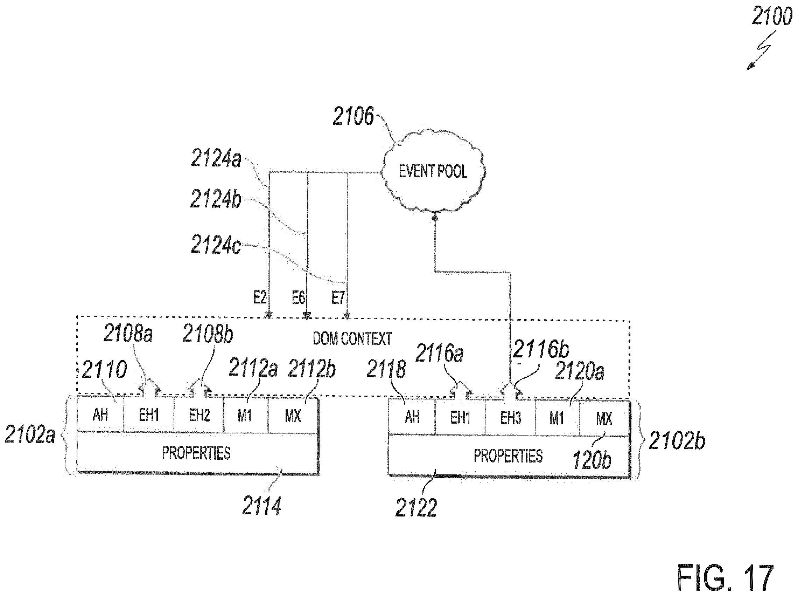

Each behavior may specify functionality applicable within a context. Behaviors and their corresponding contexts (e.g., event contexts) are discussed in more detail below. The context may be implemented using a DOM (e.g., the DOM 2104 shown in figure 17). The context may be a user interface element, a plurality of user interface elements, one of the executable applications or a dynamic web page.

The merged application, the first executable application and the second executable application may be implemented using a client-side scripting language, e.g., JavaScript. The applications may be implemented in a dynamic web page.

As discussed above, behaviors are implemented as subclasses that extend user interface elements. Each user interface element may include at least one method; the method may have a method signature. Further, each behavior includes an identifier (e.g., B1), one or more methods, each method having a method signature (e.g., number, type and order of parameters) and a version (e.g., a number or timestamp). The identifier may also be part of the method signature. Merging the behaviors of the two applications may comprise matching method signatures of the behaviors of the second application with method signatures of the user interface elements of the first application.

Merging the behaviors of the applications comprises determining a union of the behaviors. In particular, behavior identifiers of the second application that are not present in the first application are added to the first application. For example, given that the first executable application has behaviors B1, B2, and B3, and the second executable application has behaviors B2, B4 and B5, the merged application has behaviors B1, B2, B3, B4 and B5.

Moreover, a behavior of the second executable application may override (or replace) a behavior of the first executable application. For example, if a user interface element of the first application includes at least one behavior that can be overridden (or replaced) and the behavior has a method signature matching the method signature of a behavior of the second application, then the behavior of the second application may extend the user interface element of the first application and override the behavior of the first application.

Further, when behaviors of each application have methods with the same method signatures, the behavior versions are compared. When the behavior of the second executable application has same method signature(s) and a version (number) greater than or equal to a version (number) of the behavior of the first executable application, the behavior of the second executable application overrides the behavior of the first executable application.

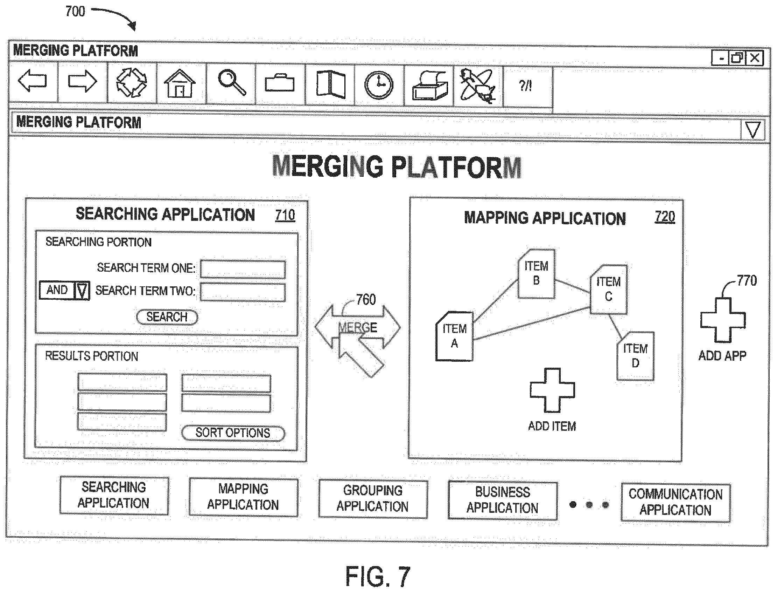

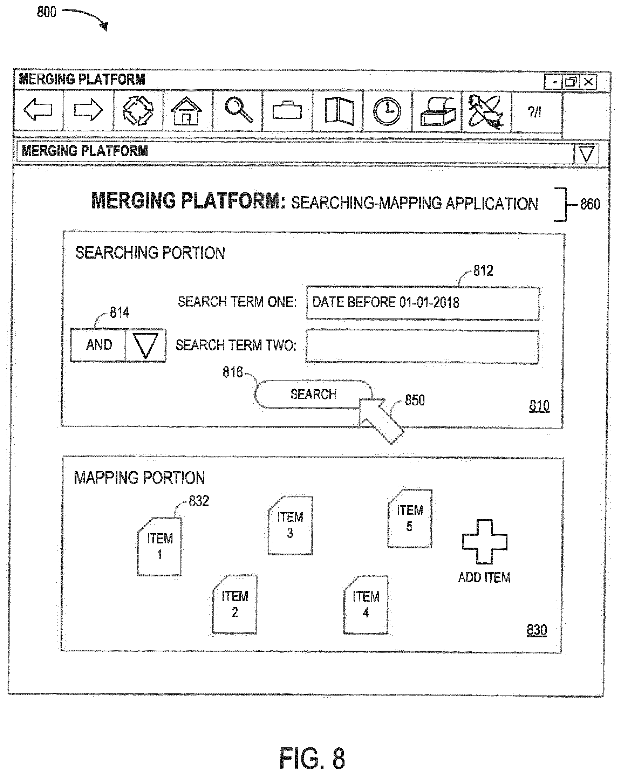

In the example of Figures 7 and 8, the results portion 120 may be implemented as at least one behavior of the searching application 710 and the mapping portion 830 may be implemented as at least one behavior of the mapping application 720. When the mapping application 720 is merged with the searching application 710, a method signature (e.g., all method signatures) of the mapping portion 830 may match a method signature (e.g., all method signatures) of the searching application. Further, a version of the mapping portion 830 may be greater than a version of the results portion 120.

Accordingly, the first application and its corresponding behaviors may be displayed within the merged application. Similarly, the second application and its corresponding behaviors may be displayed within the merged application. Alternatively, one or more of the behaviors of the first application may be applied to the second application and one or more of the behaviors of the second application may be applied to the first application.

Merging the parameters of the applications may comprise determining a union of the parameters. In particular, the merged application may have the union of the parameters (input and output) of the first application and the parameters (input and output) of the second application. In other words, assuming that the first application has parameters *FP* and the second application has parameters *SP*, the parameters of the merged application may be

$$MP = FP \cup SP$$

Further, in some cases, the first application may provide or feed data to the second application within the merged application. In particular, the outputs of the first application may be provided to the second application within the merged application.

Consider, for example, a first application having input parameters (inputs) of I1, I2, and I3 and output parameters (outputs) of O1, O2, and O3. In addition, a second application has inputs of I2, I4 (which is, in fact the same as O3) and outputs of O1 and O5. In this case, assuming that the first application feeds data to the second application, the merged application might have inputs of I1, I2, I3, and I4 and outputs of O1, O2, and O5. Any number of other mappings might be provided as appropriate.

A parameter of the first application may be matched to (i.e., determined to be the same as) a parameter of the second application in a number of ways. In particular, one or more of the following criteria may be used to determine a match between parameters from different applications: the callable unit (e.g., class) of the parameter (i.e., the callable unit to which the parameter belongs), a type of user interface element (e.g., button or text box), the behavior, the name, the data type. For example, if both parameters are associated with the same type of user interface element (e.g., a text box), they are part of the same callable unit (e.g., a search query class) and they have the same name, a match may be determined. Similarly, a match may be determined if both parameters are part of the same behavior (e.g., database connection) and have the same name (e.g., databaseName or queryInput).

According to some embodiments, the merging is a runtime operation. Moreover, in some embodiments at least one of the first and second executable applications was not created at design time in accordance with the merging platform. In some cases, prior to the merging, the system may verify that the first and second executable applications represent a valid combination. If not, the system may transmit an error indication to the user (*e.g.*, along with an explanation that may help the user solve the problem).

At S450, the system may arrange to facilitate execution of the merged application. The arranging to facilitate execution of the merged application might comprise, for example, arranging for the merged application to be executed via the graphical user interface (e.g., executing the merged application via the graphical user interface). According to some embodiments, it might involve saving a copy of the merged application and/or transmitting information about the merged application to be executed by another user. In some embodiments, the system may further initiate a naming operation to assign a name to the merged application. The naming operation might comprise, for example, an automatic naming operation or a manual naming operation where the user defines the name for the merged application.

Although a merger of two executable application is described herein for clarity, note that embodiments may be associated with any number of executable applications (*e.g.*, a merge might be further associated with a third executable application in the application data store). Similarly, according to some embodiments, the second executable application might itself actually be a merged application associated with two other executable applications. According to some embodiments, the system may subsequently receive from the user a trigger to separate the merged application. In this cases, responsive to the trigger, the system may re-create the first and second executable applications.

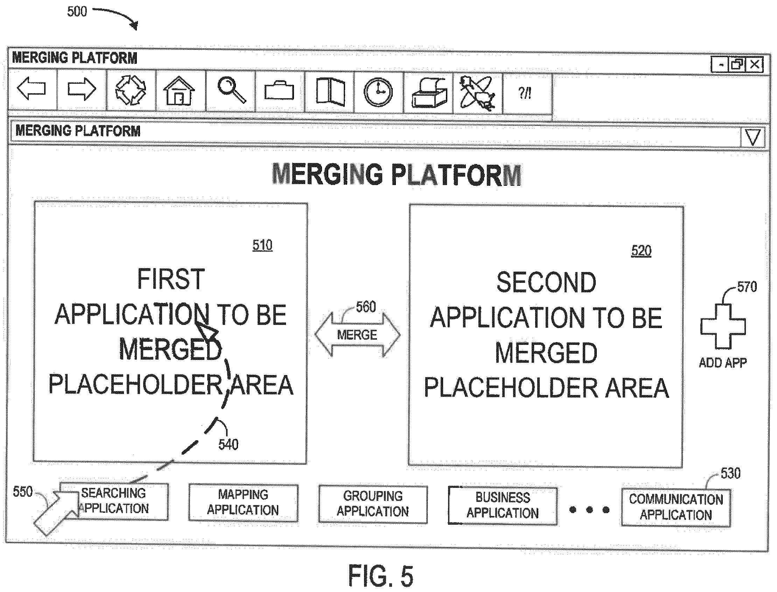

By way of example, consider FIG. 5 which illustrates a merging platform display 500 in accordance with some embodiments. The merging platform display 500 includes two placeholder areas 510, 520 that can be utilized by a user to select executable applications for the system. According to some embodiments, at least one selection received from the user involves a graphical drag-and-drop operation of a graphical representation 530 of an executable application into one of the placeholder areas 510, 520. For example, a selection of a first executable application may be received when the graphical representation 530 of the searching application is selected with a computer pointer 550 and dragged into the first placeholder area 510 as illustrated by the dashed arrow 540 in FIG. 5. Note that the merging platform display 500 may further include a merge icon 560 and an add application icon 570 as will be described.

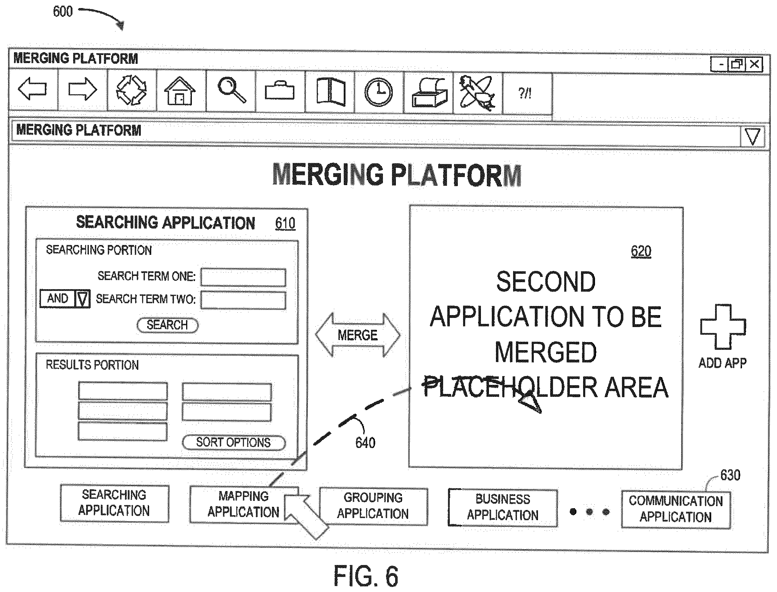

FIG. 6 illustrates a merging platform display 600 after the graphical representation 530 of the searching application has been selected and dragged into the first placeholder area 510 according to some embodiments. As can be seen, a first placeholder area 610 now displays the searching application. In this example, a selection of a second executable application is received when the graphical representation 630 of the mapping application is selected with the computer pointer and dragged into a second placeholder area 620 as illustrated by the dashed arrow 640 in FIG. 6.

FIG. 7 illustrates a merging platform display 700 after the graphical representation 630 of the mapping application has been selected and dragged into the second placeholder area 620 according to some embodiments. As can be seen, a first placeholder area 710 still displays the searching application and a second placeholder area 720 now displays the mapping application. At this point, the user might select the "Add Application" icon to add additional executable application (*e.g.*, a third application, a fourth application, *etc.*). When finished, the user may select the "Merge" icon 760 to trigger the merge of the selected applications (*i.e.*, the searching application and the mapping application in the example of FIG. 7).

The result of the triggering of this merge operation, according to some embodiments, is illustrated by the merging platform display 800 of FIG. 8. In particular, the result of merging the two applications (including the behaviors as well as the input and output parameters) may be configuring a graphical user interface to include both applications. Behaviors may refer to independent specified sets of operations and may be a subset of application functionality. The behaviors may be implemented as client-side scripting modules, e.g., JavaScript classes.

The display 800 may be automatically generated and includes a searching portion 810 (associated with the searching application described with respect to FIG. 1) and a mapping portion 830 (associated with the mapping application described with respect to FIG. 2), both being associated with the merged application. A user may enter one or more search terms 812 (and associated Boolean operators 814 if desired) into the searching portion 810. Activation of a "Search" icon 816 by a computer pointer 850 will result in the generation of a set of items that satisfy the search criteria. According to some embodiments, this set of items is automatically displayed on the mapping portion 830. That is, items 832 (items 1 through 5) satisfied the "Date Before 01-01-2018" search term 812 that was input by the user via the searching portion 810. As a result, the user does not need to export information from one application (e.g., the searching application) and import that information into another application (e.g., the mapping application). According to some embodiments, the merging platform may automatically generate a name 860 for the merged application (e.g., "Searching-Mapping Application"). According to other embodiments, the user may provide a name and/or modify an automatically generated name.

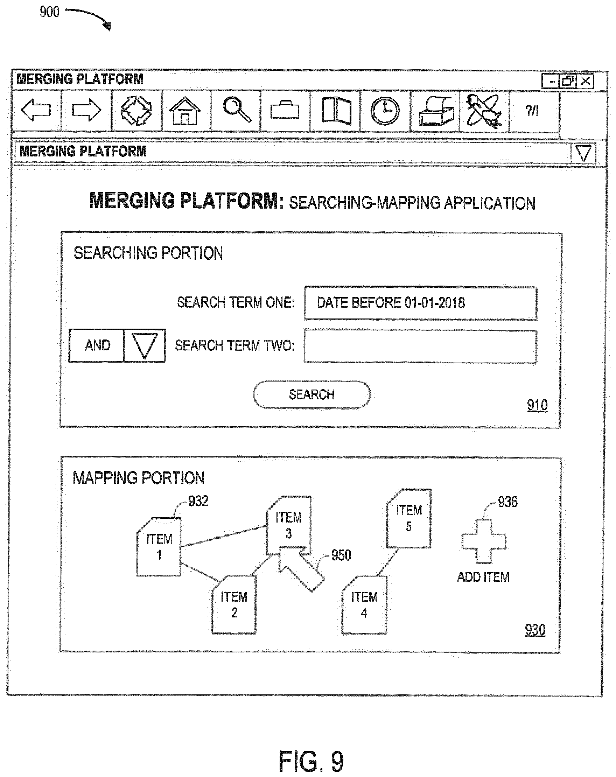

Once the items 832 are displayed in the mapping portion 810, the user may interact with elements (e.g., in a fashion similar to that described with respect to FIG. 2). For example, FIG. 9 illustrates a merging platform display 900 with a searching portion 910 and a mapping portion 930 that was automatically populated with items 932 as described with respect to FIG. 8. In particular, a user may select items 932 with the computer pointer 950, establish connection between items (e.g., as illustrated by the line connecting item 1 and item 3 shown in FIG. 9), activate an "Add Item" icon 936, etc.

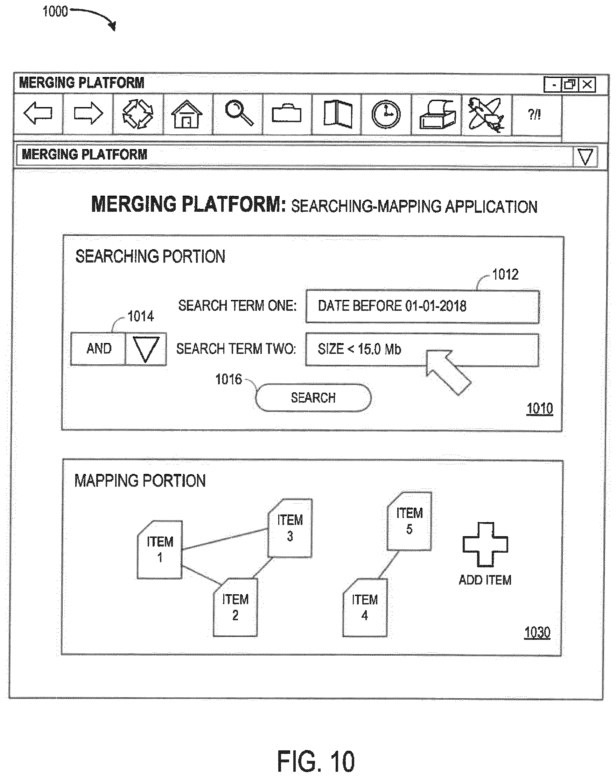

After the user begins interacting with the mapping portion 930, note that he or she may again interact with the searching portion 910. For example, FIG. 10 illustrates a merging platform display 1000 where the user has added a second search term to the searching portion 1010. In particular, the user may define a search (or filter) looking for items with both (as indicated by the "AND" Boolean operator 1014) a "Date Before 01-01-2018" and a "Size < 15.5 Mb" (as entered in the search terms 1012).

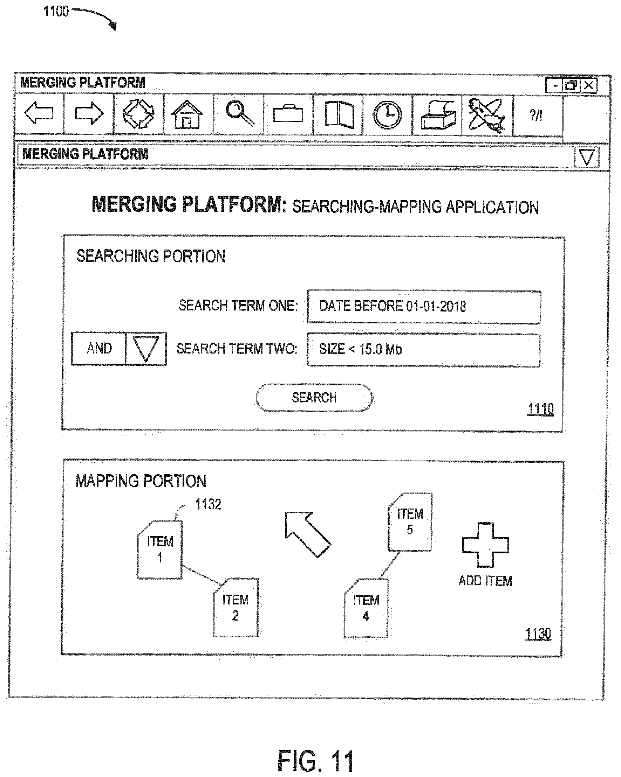

Upon selection of the "Search" icon 1016, the system will automatically update the mapping portion 1030. For example, FIG. 11 illustrates a merging platform display 1100 after the search defined in the searching portion 1110 has been initiated by the user. As a result of the new condition, only items 1, 2, 4, and 5 are displayed on the mapping portion 1130. That is, the addition of a new search term has caused item 3 to no longer satisfy the search criteria and, as a result, it has been automatically removed from the mapping portion. Note that the connection from item 2 to item 1 has also been automatically removed.

According to some embodiments, lines between items might also be automatically re-routed. Consider, for example, a mapping portion that displays items W, X, Y, and Z with the following connections: W-to-X, X-to-Y, and Y-to-Z. If the user adds a new search term (e.g., in a searching portion of an automatically merged application) such that only items W, X, and Z now satisfy the search conditions, the system might update the connections as follows: W-to-X, and X-to-Z. That is, because there was originally a path from X to Z (i.e., through X) that path might be maintained even when item X is removed from the display.

The connections may be endowed with multiple attributes, possible according to an ontology (e.g., is-a, has, is-child-of, directs, is-managed-by, buys, sells, owns, etc.). In some cases, a further behavior could be added to connection behaviors, making it possible to attach various meanings to each connection, e.g., a behavior "semantic types for purchasing" (including such semantic attributes or tags as "buying", "selling", "paying", "invoicing", "ordering").

Thus, embodiments may be associated with a runtime configuration of an application User Interface ("UI") to facilitate the merging of two or more applications into a single application. According to some embodiments, a user can combine several applications in an ad hoc manner to perform a task in an integrated manner which requires the combination of the functionalities of each concerned application. The user may merge two or more applications into a single application substantially seamlessly, without the need to use a separate and/or dedicated configuration UI. Also, the newly created application (i.e.., the merged application) may be persisted so that the user (and, potentially, other users) can access it at a later time.

As a concrete example, a first application may be a search application that contains common search functionality, thus allowing the user to enter search keywords and retrieve results, with some query algorithms for processing and some rendering capabilities for manipulating the results (e.g., sorting). A second application may be a mapping application where users can create items and connections between the items according to some visual graph notation (e.g., using boxes and arrows to represent items (nodes) and connections or "edges"). Conventionally, a user can interact either with the search application or, exclusively, with the mapping application. As a result, items will remain only in the application in which they were created. For the searching application, these would be the result items. For the mapping application, these would be user-generated items in the form of boxes plus any additional user-generated connections between those boxed.

According to the present embodiment, a user may merge the two standalone applications into a new, single application (the "merged application"), thus combining their separate functionalities for use in an integrated manner. For example, the user may retrieve items through the search UI (or search UI subarea) which was originally part of the searching application and is now is merely a portion of the new integrated merged application. Retrieved items will automatically appear in the mapping portion which was originally part of the mapping application and now is merely a portion of the newly created merged application. Further, graphically connected items from the mapping application (or "mini-graphs") can be identified and selected via the searching application. In particular, in addition to or instead of entering a search keyword, a user could enter an identifier of a mini-graph to select the mini-graph for display in a mapping portion (e.g., the mapping portion 830).

Rather than limiting the mapping UI part to the display area of the search UI, the user still can use the previous functionality of the original mapping application, thus adding new items, creating user-generated items, and/or connecting items (e.g., including both user-generated items and item retrieved through the search UI). In order to facilitate the reuse of this newly created merged application, the user may assign it a new title, thus making it easier to identify and activate at a later time.

According to some embodiments, the application UI may provide application merging functionality in any of a number of different ways. To help a user merge two or more applications in an intuitive and straightforward way, one embodiment may contain an area with placeholders into which the original applications can be dropped (one-by-one). As a result, the newly created application may combine the functionality of both original applications and can be otherwise treated as a complete application in its own right.

Embodiments may provide substantial benefits because end users may decide, on their own, which applications they want to combine or merge into a single application, taking advantage of the combined functionality of otherwise unconnected applications (which may provide significant synergies). As a consequence, coordination and implementation efforts can be reduced for software manufacturers (lowering the total cost of software development and use). Also, embodiments may lower the risk of wrongly guessing which functionalities users may expect in combined offerings of applications. Note that embodiments might be implemented in a computing environment hosting applications conventionally used only in an isolated fashion (and which could not be merged into a new single application).

Although some embodiments are described herein with respect to the merging of multiple Graphical User Interface ("GUI") based applications (e.g., the searching and application applications), note that embodiments may be used in connection with other types of applications. For example, one or more applications using a conversation or speech-based user interface could be merged in accordance with any of the embodiments described herein. Likewise, the merging platform itself might not be implemented using a GUI platform (for example, the merging process might be triggered via a voice interface).

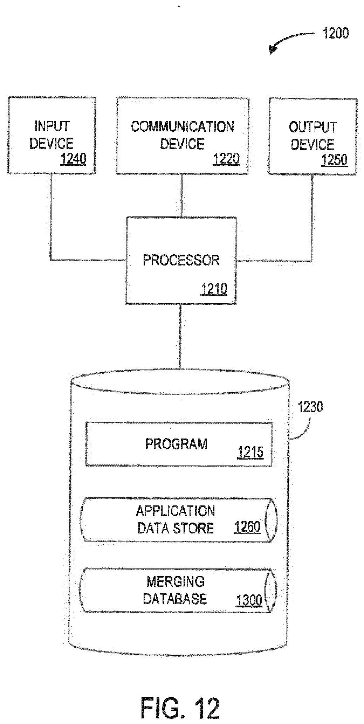

Embodiments described herein may comprise a tool or plug-in that facilitates the automatic merging of multiple executable applications for a user. For example, FIG. 12 illustrates a merging apparatus or platform 1200 that may be, for example, associated with the system 300 of FIG. 3. The merging platform 1200 comprises a processor 1210, such as one or more commercially available Central Processing Units ("CPUs") in the form of one-chip microprocessors, coupled to a communication device 1220 configured to communicate via a communication network (not shown in FIG. 12). The communication device 1220 may be used to communicate, for example, with one or more remote user devices (e.g., PCs and smartphones). Note that communications exchanged via the communication device 1220 may utilize security features, such as those between a public internet user and an internal network of the insurance enterprise. The security features might be associated with, for example, web servers, firewalls, and/or PCI infrastructure. The merging platform 1200 further includes an input device 1240 (e.g., a mouse and/or keyboard to enter information about merge capabilities, input and output requirements, etc.) and an output device 1250 (e.g., to output reports regarding user merge activities, error logs, and/or overall system utilization).

The processor 1210 also communicates with a storage device 1230. The storage device 1230 may comprise any appropriate information storage device, including combinations of magnetic storage devices (e.g., a hard disk drive), optical storage devices, mobile telephones, and/or semiconductor memory devices. The storage device 1230 stores a program 1215 and/or an application merging tool or application for controlling the processor 1210. The processor 1210 performs instructions of the program 1215, and thereby operates in accordance with any of the embodiments described herein. For example, the processor 1210 may exchange information with a user via a graphical user interface and access an application data store containing information about executable applications (including input data and output data associated with each executable application). The processor 1210 may receive a selection, via the graphical user interface, of a first executable application in the application data store. The processor 1210 may also receive a selection, via the graphical user interface, of a second executable application in the application data store, and receive an indication from the user that an application merging application is to be triggered. Responsive to this triggering, the processor 1210 may merge components of the first executable application and the second executable application, including behaviors, input parameters and output parameters of each executable application, to create a merged application. The processor 1210 may then arrange to facilitate execution of the merged application.

The program 1215 may be stored in a compressed, uncompiled and/or encrypted format. The program 1215 may furthermore include other program elements, such as an operating system, a database management system, and/or device drivers used by the processor 1210 to interface with peripheral devices.

As used herein, information may be "received" by or "transmitted" to, for example: (i) the merging platform 1200 from another device; or (ii) a software application or module within the merging platform 1200 from another software application, module, or any other source (including, for example, web pages, web content, *etc.*).

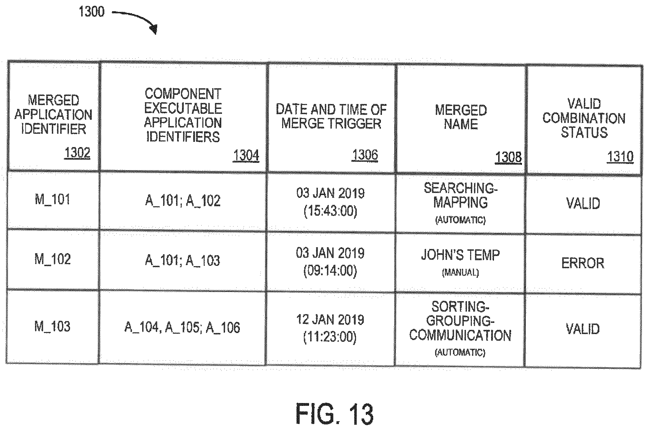

In some embodiments (such as shown in FIG. 12), the storage device 1230 further stores an application data store 1260 (*e.g.*, associated with different applications associated with an enterprise) and a merging database 1300. An example of a database that might be used in connection with the merging platform 1200 will now be described in detail with respect to FIG. 13. Note that the database described herein is only an example, and additional and/or different information may be stored therein. Moreover, various databases might be split or combined in accordance with any of the embodiments described herein. For example, the application data store 1260 and/or merging database 1300 might be combined and/or linked to each other within the program 1215.

Referring to FIG. 13, a table is shown that represents the merging database 1300 that may be stored at the merging platform 1200 according to some embodiments. The table may include, for example, entries identifying merged applications that have been created for a user (or group of users) by the system. The table may also define fields 1302, 1304, 1306, 1308, 1310 for each of the entries. The fields 1302, 1304, 1306, 1308, 1310 may, according to some embodiments, specify: a merged application identifier 1302, component executable application identifiers 1304, a data and time of merge trigger 1306, a merged name 1308, and a valid combination status 1310. The merging database 1300 may be created and updated, for example, based on information electronically received from a merging platform and/or users (*e.g.*, via interactive graphical displays).

The user action identifier 1302 may be, for example, a unique alphanumeric code identifying a merged application that was automatically created for a user (*e.g.*, by a merging platform). The component executable application identifiers 1304 may identify which applications (*e.g.*, which two applications, three applications, *etc.*) were included in the merged application. The date and time of merge trigger 1306 may indicate when the user initiated the merge operation. The merged name 1308 might be alphanumeric name assigned the merged application (*e.g.*, automatically or manually by the user) that could be used, for example, to save the merged application, access the merged application at a later time, transmit the application (or a pointer to the application) to another user, *etc.* The valid combination status 1310 might indicate a result of an automatically review performed by the system to see if the component executable application identifiers are compatible with an automatic merge operation (*e.g.*, "valid" or "error")

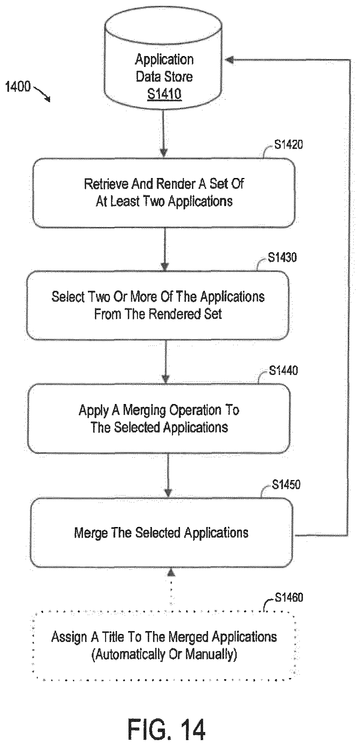

FIG. 14 is a more detailed process diagram 1400 example in accordance with some embodiments. At S1410, an application data store may contain a library of applications (of many different types) that are utilized by users of an enterprise. At S1420, the system may retrieve and render of set of at least two applications. The set of applications may be retrieved and rendered, for example, based on tasks currently being performed by a user. At S1430, the user may select two or more of the applications from the rendered set. For example, the user might drag-and-drop icons, click checkboxes, highlight application names in a list of name, *etc.* to indicate his or her selections to the system. At S1440, the system may apply a merging operation to the selected applications, and the selected applications may then be merged into a single, merged application at S1450. At S1460, a title might be assigned to the merged selected applications (*e.g.*, the newly created, single application might be named either automatically or manually). Note that the naming step may be optional, as indicated by the dotted line of FIG. 14. The merged application may then be stored into the application data store (as a single, standalone application) at S1410.

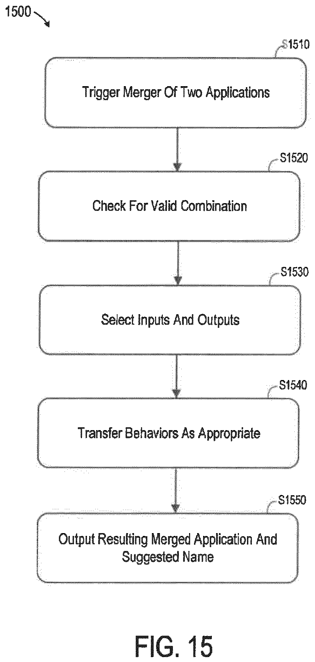

FIG. 15 is another process diagram 1500 example in accordance with some embodiments. At S1510, a user action may trigger a merging of two (or more) applications. At S1520, the system may check if the applications indicated at S1510 comprise a valid combination. Verifying that the applications are a valid combination may include reviewing the application identifiers. Also, the verifying may include determining whether the inputs of the second application match the outputs of the first application. In other words, the applications may be a valid combination when the output (or outputs) of the first application can be provided as input (or inputs) to the second application. The verifying further includes determining whether the number of inputs of the second application is compatible with the number of outputs of the first application. The second application specifies a range for the number of inputs accepted and the number of outputs of the first application has to may fall within this range. Alternatively, the verifying may only be successful if the number of outputs from the first application is equal to the number of inputs to the second application.

The verifying may also include determining whether the data types of the inputs of the second application are compatible with the data types of the outputs of the first application. In particular, it may be that each of the inputs of the second application must by one of a set of data types. The verifying may include determining whether the data types of the outputs of the second application are in the set of data types. For example, the mapping application discussed above may require at least two inputs, each having a data type of Integer or String. The searching application may output a set of five items having a String data type. Accordingly, because the searching application outputs more than at least two items and because items output by the searching application have the data type String, the outputs of the searching application match the inputs of the mapping application. Therefore, the applications comprise a valid combination.

If a valid combination is found, the system may select appropriate input and output information at S1530. For example, the system may map inputs to outputs, outputs to inputs, *etc.* At S1540, the system may transfer behaviors as appropriate. At S1550, the resulting merged application may be output for utilization by the user. According to some embodiments, the system may also generate a suggested name for the merged application (*e.g.*, by concatenating alphanumeric characters from the name of a first application with alphanumeric characters from the name of a second application).

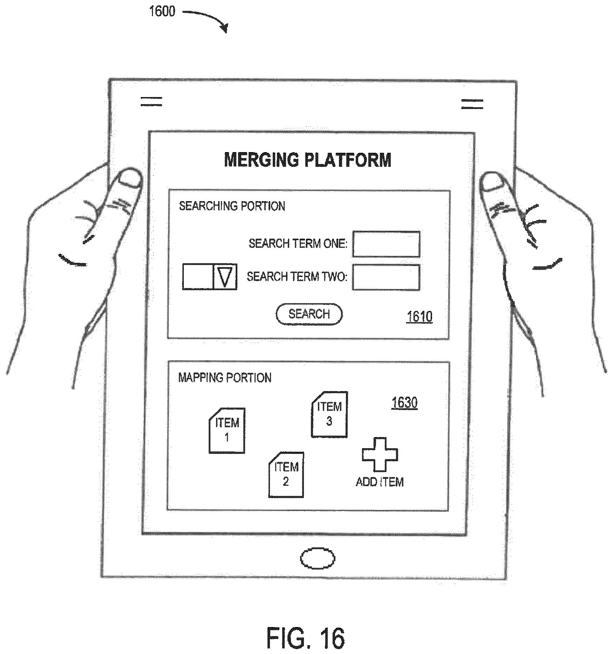

Although specific hardware and data configurations have been described herein, note that any number of other configurations may be provided in accordance with embodiments of the present invention (*e.g.*, some of the information associated with the displays described herein might be implemented as a virtual or augmented reality display and/or any of the embodiments might be implemented using a cloud based computing platform). Moreover, although embodiments have been described with respect to particular types of data structures and attribute characteristics, embodiments may instead be associated with other types of data (*e.g.*, additional information might be collected and/or automatically used about applications being merged, usage of merged applications, *etc.*). Still further, the displays and devices illustrated herein are only provided as examples, and embodiments may be associated with any other types of user interfaces. For example, FIG. 16 illustrates a tablet or handheld computer 1600 being used according to some embodiments. In particular, computer 1600 includes a merging platform display 1610 with a searching portion 1610 and a mapping portion 1620. In this way, a user might utilize a touch sensitive screen enter search terms and graphically link result items in accordance with any of the embodiments described herein.

FIG. 17 is a block diagram illustrating an example behavior-based Application Framework (BAF) 2100, according to an implementation of the present disclosure. For the purposes of this disclosure, and in some implementations:

• Event (E): Includes a name, a context, and optionally some data. For an event associated with a web page, the event could be in the form of a tuple (for example, "{'click', button}"). Here, the event name is 'click' and the context is a button that a user (e.g., an end user) clicked on. Accordingly, the context may be a user interface element. In other implementations, events can be structured in any way consistent with this disclosure.

• Event Pool: An abstract collection of all events generated either by an end user or behaviors.

• DOM: An implementation of the described BAF 2100 utilizes a document object model (DOM). The DOM may reside in memory (for example, as a tree of hash maps). In this example, when an event is triggered on a particular context, the event migrates up the tree of hash maps to the root element of the tree.

• Behaviors (or, interchangeably, "Behaviour"): A behavior may include one or more of the following:

o Event Handler(s) (EH): Functions that react to specific events on an event context basis and fire new events. The functions may be implemented as methods within one or more classes (e.g., JavaScript classes). This means that after reacting to a context, an EH can optionally fire new events.
For instance, a behavior can have an event handler that listens for user interaction with a user interface element (the event context) of an executable application associated with the webpage. Once the user interaction is detected, the event handler may trigger a new event associated with the web page. More specifically, the event handler may listen for a click action on a button. Once the 'click' on the particular button is detected, the event handler can then trigger a new 'page-blink' event associated with the executable application. As an example at a lower level, the event may by triggered by receipt of input and the behavior may return a result based on the input. More specifically, a database connection behaviour can wait for a user to input a query into a user interface element, e.g., a search field (the typing will trigger a native 'input' event that can be monitored). The database connection behaviour will then connect to a database and search for records in the database. Once a match is found for the native input event, the database connection behaviour can trigger a 'records-found' event in the context the behavior is in. In addition, the behavior may return a result of the query to the application including the search field.

o Attached Handler (AH): A type of event handler may be referred to as a "connected" or "attached" handler, which may be called whenever a behavior is attached to a context. In contrast, and with respect to the previous example, an EH is a function that searches in a database and 'handles' a particular event (for example, the event of the user typing text into a search field). EH's listen within a context, meaning that the function that searches the database only listens for input events in the context it is placed in (for example, the same application) and not to other events (for example, when the user types in something in other irrelevant search fields).

∘ Helper Method(s) (M): Helper methods, unlike event handlers, do not listen for events, but may be called by event handlers.

∘ Properties: Describe a state of a behavior. The state can change in-between invocations of an EH. The Properties are parameters of EHs and AHs. For example, a "database search" behavior could have the database URL as a parameter.

As illustrated, the example BAF 2100 includes behaviors 2102a and 2102b, a DOM 2104, and an event Pool 2106. The event context (or context) may be implemented via the DOM 2104. Consistent with the description above, behavior 2102a includes EH1 2108a/EH2 2108b, AH 2110, M1 2112aIMX 2112b, and Properties 2114. behavior 2102b includes EH1 2116a/EH3 2116b, AH 2118, M1 2120aIMX 2120b, and Properties 2122. events 2124a/2124b/2124c are also illustrated.

In FIG. 17, EH1 2108a (associated with behavior 2102a) and EH1 2116a/EH3 2116b (associated with behavior 2102b) are in a "listening" state. Conversely, EH2 2108b (behavior 2102a) is not in a "listening" state because an associated event (E2 2124a) triggered EH2 2108b via the DOM 2104 and EH2 2108b is considered to be instead currently "handling" event 2124a. Note that in some implementations, multi-threaded EHs are capable of handling multiple events in parallel so that a particular EH is not locked while handling an event. In typical implementations, the described framework depends upon functionality provided by modem JAVASCRIPT engines and a native event Application Programming Interface (API) implementation (on top of a particular DOM). Note that events E6 2124b and E7 2124c may have occurred, but neither of the illustrated AHs or EHs in behaviors 2102a and 2102b are listening for these specific events.

In a particular implementation, a behavior could be defined similar to:

```
/**
 * A basic behavior framework
 **/
class Behavior extends HTMLElement
{
/**
 * Interactions are eventName: handlerfunction array.
 * When the Behavior is attached / detached or when an
 * attribute of the Behavior is changed, interactions
 * are reset automatically
 **/
get interactions(){ return []}
/**
 * A list of parameters together with default values passed through attribute value pairs
 **/
get parameters(){ return {}}
/**
 * A storage of the bound event listeners (interactions)
 **/
get boundEventListeners()
{
if (this.__boundEventListeners === undefined)
this.__boundEventListeners = new Array()
return this.__boundEventListeners
}
```

```
26   set boundEventListeners(arr){ this.__boundEventListeners = arr}
27   /**
28   * Get all of the parameters
29   **/
30   constructor(params)
31   {
32   super()
33   // Set the visuals
34   this.classList.add('behaviour')
35   this.innerHTML = this.constructor.name
36   // create the parameters
37   Object.keys(this.parameters).forEach(p =>
38   {
39   Object.defineProperty(this, p,
40   {
41   set: v => this.setAttribute(p, v),
42   get: n => this.getAttribute(p)
43   })
44   // Set the default value
45   this[p] = this[p] || (params && params[p]) || this.parameters[p]
46   })
47   }
48   /**
49   * Bind all event listeners in the interactions
50   **/
51   connectedCallback()
52   {
53   // Save the contect
54   this.$context = this.parentNode
55   // Go through the interactions and bind them
56   this.interactions.forEach(i =>
57   {
58   let trigger = i[0]
59   let events = i[1]
```

```
60      let handler = i[2].bind(this)
61      // Type checking
62      {
63      this.typeCheck(trigger, HTMLElement)
64      this.typeCheck(events, Array)
65      this.typeCheck(handler, Function)
66      }
67      // Bind the events and save them
68      {
69      events.forEach(e => trigger.addEventListener(e, handler))
70      events.forEach(e => this.boundEventListeners.push({trigger, events, handler}))
71      }
72      })
73      this.dispatchEvent(new Event('connected'))
74      }
75      /**
76      * Remove all of the bindings
77      **/
78      disconnectedCallback()
79      {
80      this.dispatchEvent(new Event('disconnected'))
81      this.boundEventListeners.forEach(
82      triplet => triplet.events.forEach(e =>
83      triplet.trigger.removeEventListener(e, triplet.handler)))
84      this.boundEventListeners = new Array()
85      }
86      typeCheck(element, type)
87      {
88      if (!(element instanceof type))
89      throw `Error in trying to bind interaction. ${element} is not of type ${type}`
90      }
91      }.
```

As will be appreciated by those of ordinary skill in the art, there are a multitude of possible ways to define a behavior consistent with this disclosure in software. Other implementations of behaviors consistent with this disclosure are also considered to be within the scope of this disclosure.

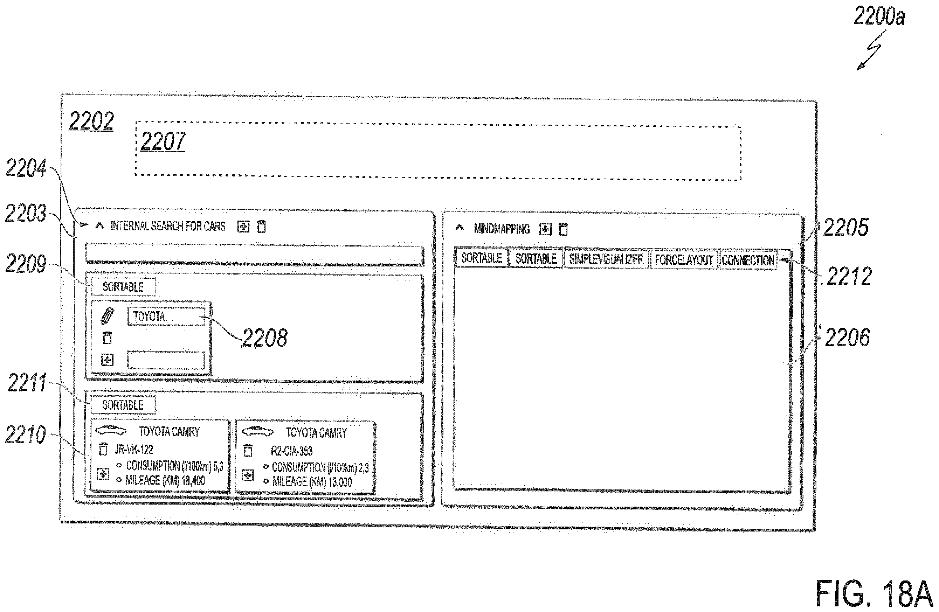

With respect to FIGS. 18A-18C, 19-20, and 21A-21C, and as will be understood by those of ordinary skill in the art, there are multiple possible implementations of any aspect (whether illustrated or not) of the figures (for example, applications, visualizations, data values, graphical layouts, functionality, and design choices). These figures are provided to demonstrate one or more aspects of and to assist with understanding of the described subject matter. No representation is made that any of the descriptions are complete, nor are the figures and descriptions meant to be limiting to the disclosed subject matter in any way. Other implementations of the described subject matter, consistent with this disclosure, are also considered to be within the scope of this disclosure.

FIGS. 18A-18C are screenshots 2200a-2200c, respectively, of an example software application (executable application) illustrating an example use of behaviors in a UI, according to an implementation of the present disclosure.

Turning to FIG. 18A, FIG. 18A illustrates a dashboard UI 2202 executed in a web browser or other GUI application. The dashboard UI 2202 is dual-paned, with each pane representing a different application and with a behavior holding area 2207. The left pane 2203 contains a database search application 2204 ("Internal Search for Cars") that can use UI search interface 2208 for data entry. For example, searching for an automotive make "Toyota" with UI search interface 2208 returns results 2210. Note that the UI search interface 2208 is illustrated within a portion of left pane 2203 associated with a behavior 2209 (here, "Sortable"), that enables reordering of the items within this region by some value (for example, name). Thus, the left pane 2203 may be considered a user interface element corresponding to the behavior 2209, a sortable behavior that specifies an order in which to display data in the left pane 2203 (e.g., in ascending order by name).

As illustrated, the results 2210 (if applicable) are represented in application 2204 within a graphical item displaying a name, item number, fuel consumption, and mileage value. Note that the results 2210 are associated with a behavior 2211 (here, "Sortable"), that sorts the results by some value (for example, name, item number, fuel consumption, or mileage value).

The right pane 2205 contains a graph building application 2206 ("Mindmapping"). At the top of right pane 2206 are graphical representations of example behaviors 2212 as previously described. For example, behaviors 2212 include "Sortable," "Simple Visualizer," "Force Layout," and "Connection."

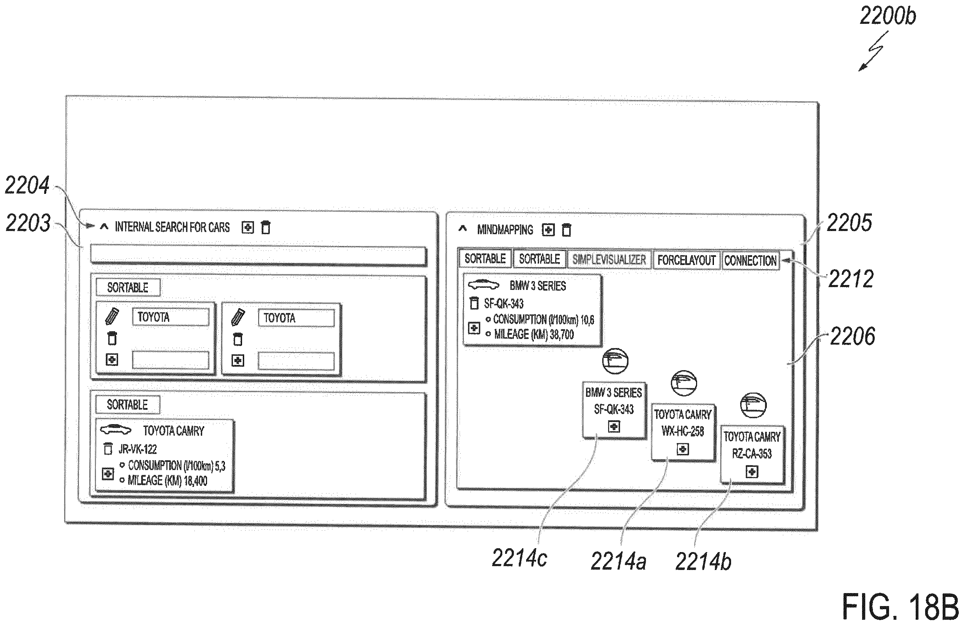

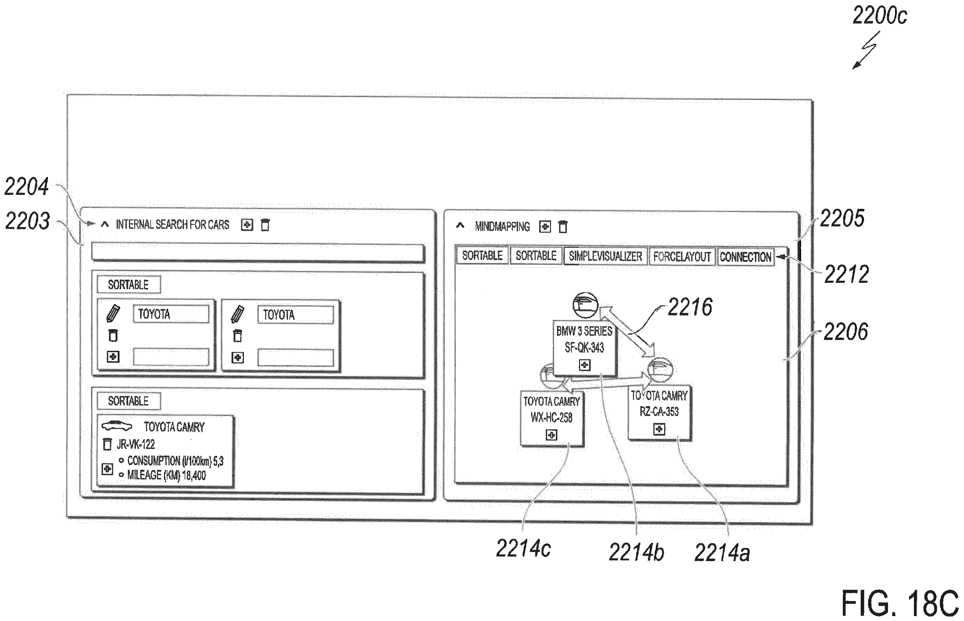

Turning to FIG. 18B, if UI result elements (2210) from application 2204 are dragged into application 2206, the display characteristics of each UI result element 2210 change to incorporate the defined behaviors 2212 associated with application 2206. For example, as illustrated, each result 2210 is visually transformed and displayed as a circular type icon (here, icons 2214a, 2214b, and 2214c) with just a name and item number. The illustrated name and item number reflects the defined behaviors 2212 (for example, for at least the "Simple Visualizer" behavior). Additionally, application 2206 separates visualized results such as 2214 so that two results can be visually connected (for example, using a UI select-and-drag-type action) according to the "Connection" behavior in a graph like format with a connection (for example, connection 2216) as illustrated in FIG. 18C.

Turning back to FIG. 18A, note that if an example behavior 2212 is dragged out of application 2206 into the behavior holding area 2207 (for example, "Simple Visualizer"), that particular behavior 2212 is no longer applicable to application 2206. In this case, the behavior holding area 2207 would display the behavior 2212 and permit the behavior 2212 to be dragged back into application 2206 or other portion of the dashboard UI 2202. For this example, the simple UI visualizations in FIG. 18C would revert to boxes (as illustrated by result 2210) unless a different behavior 2212 affected the style (e.g., look) of the UI element. Adding the behavior 2212 back into the application would then reapply the behavior 2212 to the UI elements affected by the behavior 2212.

Similarly, dragging a behavior 2212 from the application 2206 to the application 2204 would apply the behavior 2212 appropriately to application 2204. For example, if the "Simple Visualizer" behavior 2212 was dragged to the results area (holding results 2210), results 20 would change in appearance to simple visualizations as illustrated in FIGS. 2B & 2C (icons 2214a, 2214b, and 2214c).

Note also that if behaviors associated with application 2204 (for example, behavior "sortable" 2209 and 2211) are removed (for example, deleted, dragged to another region of application 2204, dragged to application 2206, or dragged to the behavior holding area 2207), the applicable region of application 2204 would no longer be subject to the "sortable" behavior. As can be seen, behaviors are movable from one application to another to affect different UI elements. The UI elements may be configured to be subject to particular behaviors. For example, the UI elements may include properties that can be specified in behaviors or abstract methods that can be implemented in behaviors. behaviors can also be configured to be, for example, cloneable, deletable, read-only, or according to some other attribute consistent with this disclosure.

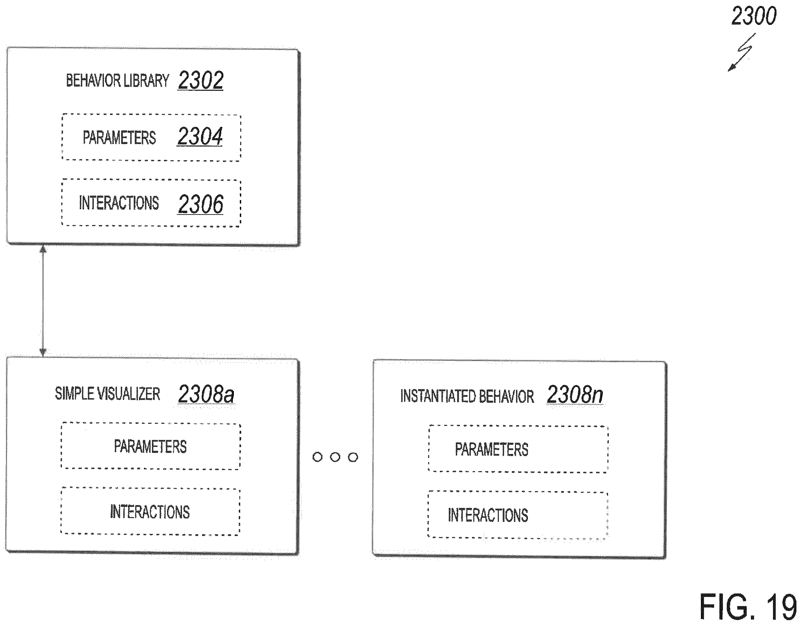

FIG. 19 is a block diagram 2300 of a Behavior Library class and instantiated behavior instances, according to an implementation of the present disclosure. As illustrated, Behavior Library 2302 (for example, behaviors.js) is a class of the described framework representing a single behavior. Multiple Behavior Libraries 2302 can be configured to work together as an application (that is, an application is made up of one or more behaviors - similar to application 2206 in FIG. 18A with multiple behaviors 2212). Parameters 2304 and Interactions 2306 represent functions (analogous to an API) for interacting with a particular behavior. Other functions, although not illustrated, are possible. For example, a "Constructor" function used to instantiate a particular behavior and for "ConnectedCallback", "DisconnectedCallback", and any other function consistent with this disclosure.

Additionally, for each specific type of behavior, the Parameters 2304 and Interactions 2306 can vary to support different behavior functionality. As specific examples, a "Connection" behavior can have a "Strength" Parameter 2304 and "connected", "dragend", and "physics changed" Interactions 2306. A "Sortable" behavior can have "pull", "put", and "group" Parameters 2304 and a "connected" Interaction 2306. A "Simple Visualizer" behavior can have a "constructor function" Parameter 2304 and "disconnected", "connected", and "dragend" Interactions 2306. Finally, a "Force Layout" behavior can have a "strength" Parameter 2304 and "disconnected", "connected", and "dragend" Interactions 2306. The Force Layout behavior may be operable to disperse user interface elements (e.g., structural, interaction or control elements, as discussed above), thereby increasing space (or mutual distance) between the elements. Accordingly, after use of the Force Layout behavior, it may be easier to connect the dispersed elements via point-and-click actions or the like.

An instantiated behavior, for example, behavior 2308a (Simple Visualizer) is an instance of the Behavior Library 2302 and represents the specified behavior. As illustrated, one or more instances of the same behavior or other behaviors (for example, Instantiated behavior 2308n) can be instantiated from the illustrated Behavior Library 2302. Components of the framework (for example, behaviors) interact with other instances of the framework through Events, as previously described.

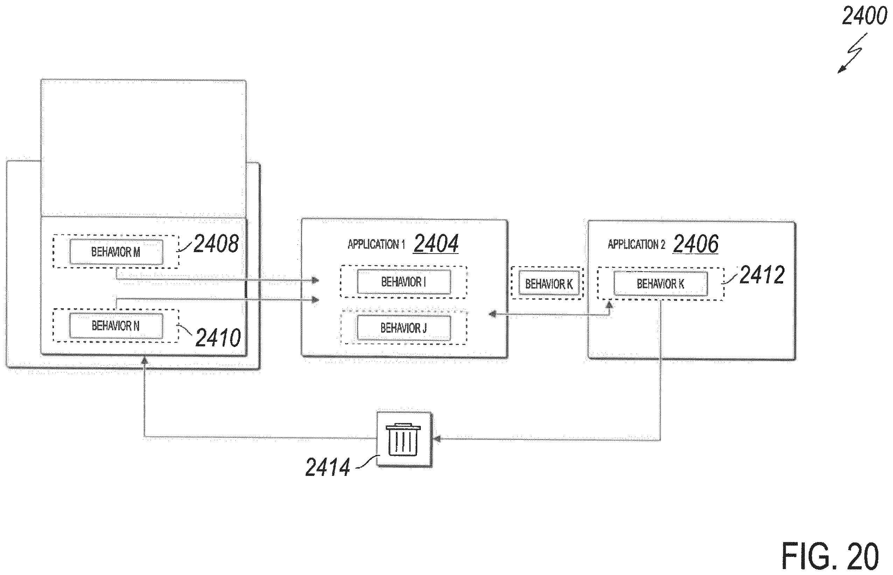

FIG. 20 is a block diagram 2400 illustrating movement of behaviors between applications, according to an implementation of the present disclosure. For example, FIG. 20 provides an additional view and context for the description of applications and behaviors associated with FIGS. 18A-18C. FIG. 20 also illustrates that behaviors are not static in nature. Behaviors can be associated with applications and added and deleted at runtime. For example, if a behavior provides connection to a database for an application and the behavior is deleted, connection to the database is no longer possible. If connection to the database is desired at a later point, an appropriate Behavior can be added to the application to restore the functionality (or a different, more appropriate behavior with slightly different functionality).

As illustrated, a Search Application 2402 (for example, similar to application 2204 in FIG. 18A), Application 1 2404, and Application 2 2406 each contain behaviors. As an example, Behavior M 2408 and Behavior N 2410 can be dragged and dropped from Search Application 2402 and into Application 1 2404. Similarly, Behavior K 2412 in Application 2 2406 can be dragged between Application 2 2406 and Application 1 2404. FIG. 20 also illustrates that Behavior K 2412 can be deleted (for example, stored in a holding area or clipboard 2414) and added to Search Application 2402. It should be noted that not all possible drag-and-drop functionality is illustrated with respect to FIG. 20. For example, the illustrated drag-and-drop actions between Search Application 2402 and Application 1 2404 are shown to be unidirectional. In other implementations, the drag-and-drop functionality can be bidirectional as illustrated between Application 1 2404 and Application 2 2406. Likewise, in some implementations, the illustrated delete/add functionality with respect to 2414 can be bidirectional.

Accordingly, when merging applications, it may be possible to add or delete behaviors from the merged application. Similarly, it may be possible to add behaviors to the merged application or delete behaviors from the merged application.

In some implementations, behaviors can be used to permit an entire source application and associated behaviors to be incorporated into a target application. In this case, the target application would incorporate the source application and associated behaviors.

In some implementations, principles of machine learning technologies (for example, machine learning algorithms, artificial intelligence engines, or pattern matching algorithms) can be used to predict which elements of a webpage are useful objects (for example, business objects) that contribute knowledge with respect to the webpage and to modify behaviors appropriately. For example, on an airline reservation webpage, a menu is not a business object because outside of the webpage, a menu does not generally contribute useful knowledge with respect to an airline reservation webpage, but lists of airline flights, flight times, and the like are very useful with respect to the airline reservation webpage. With respect to behaviors, the knowledge gathered by the machine learning algorithm can be used with respect to business objects that can be affected by one or more behaviors (for example, Sortable or Simple Visualizer). With the gathered knowledge, one or more behaviors can be parameterized for enhanced functionality. As an example, a particular behavior can be parameterized to receive the size of a list of airline data and to adjust the size of a UI widget appropriately or to display particular information deemed most important within the widget.

FIGS. 5A-5C are screenshots 2500a-2500c, respectively, illustrating an example definition of a behavior in a webpage UI, according to an implementation of the present disclosure.

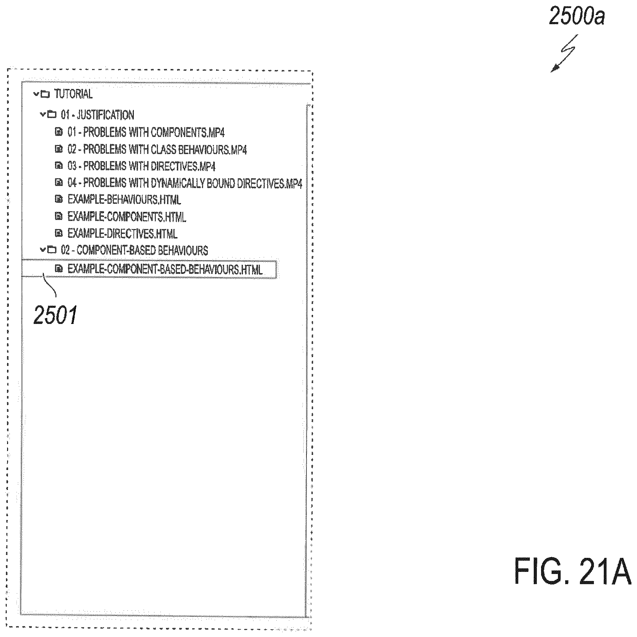

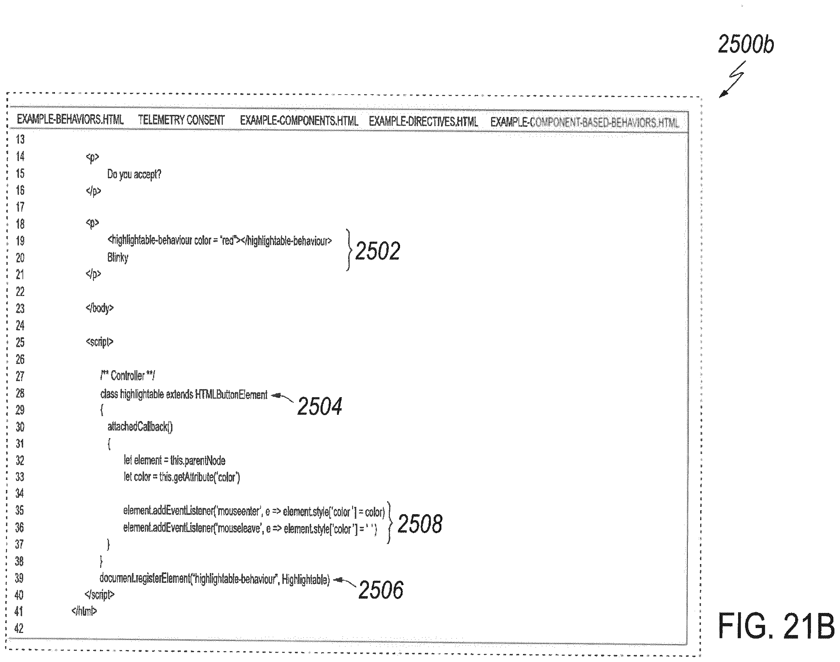

Turning to FIG. 21A, FIG. 21A illustrates a code selection graphical user interface (GUI) 2500a with selected sample code 2501 (here, "Example-Component-Based-Behaviours.HTML") used to define a behavior as described in this disclosure. For example, turning to FIG. 21B, FIG. 21B is a sample code listing 2500b of an example component-based behavior corresponding to selected sample code 2501 in FIG. 21A. In FIG. 21B, a UI element is defined (here a paragraph with the text "Blinky" at 2502). The UI element maybe implemented using a client-side scripting code, e.g., an HTMLButtonElement class. A behavior is then defined for the UI element (here, the paragraph with "Blinky" text has a "highlightable-behaviour" defined at 2502). A class may be implement the behavior (here, "highlightable extends HTMLButtonElement" at 2504). The behavior may be registered by passing the defined class to a register function (for example, at 2506). Trigger events may be defined in the class to bind/activate when particular events associated with the UI element are detected (for example, addEventListener at 2508 for particular events "mouseenter", "mouseleave", etc.). The defined behavior may be tested. Although a button is discussed in the example above, other controls (i.e., widgets or control elements) may be used.

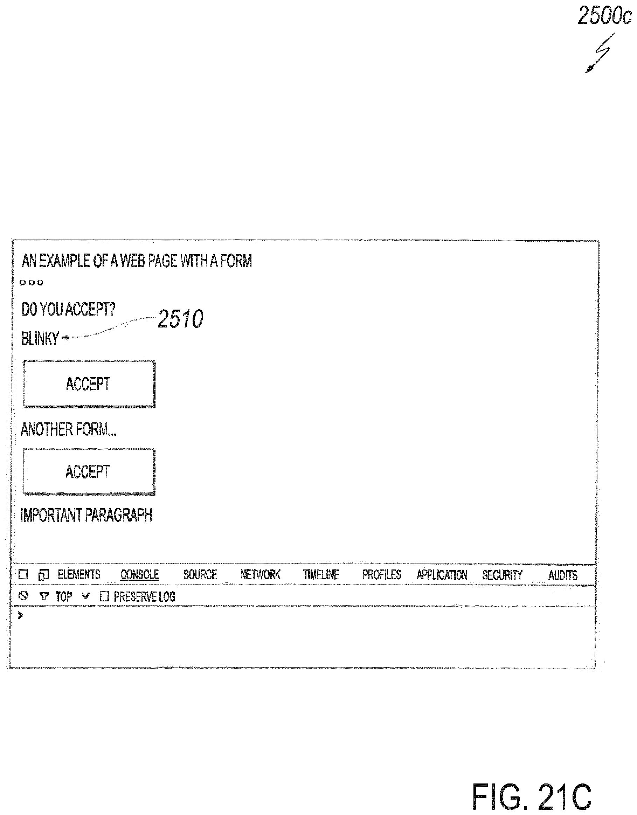

Turning to FIG. 21C, FIG. 21C illustrates a webpage UI 2500c with the defined UI element and behavior of FIGS. 5A & 5B, according to an implementation of the present disclosure. UI element 2510 (paragraph with "Blinky" text) is listening for mouseenter and mouseleave events with respect to the paragraph. Upon mousenter, the text color will be changed to red (as defined in the "highlightable-behavior" behavior definition at 2502 in FIG. 21B). In FIG. 21C, a mouseenter event has not been detected so the "Blinky" text is black in color (that is, a default color). Once the mouse pointer generates a mouseenter event with respect to the paragraph (for example, moving the mouse pointer over the "Blinky" text), "Blinky" will turn red as defined (not illustrated). Moving the mouse pointer away from the paragraph and generating a mouseleave event, the text will turn back to black.

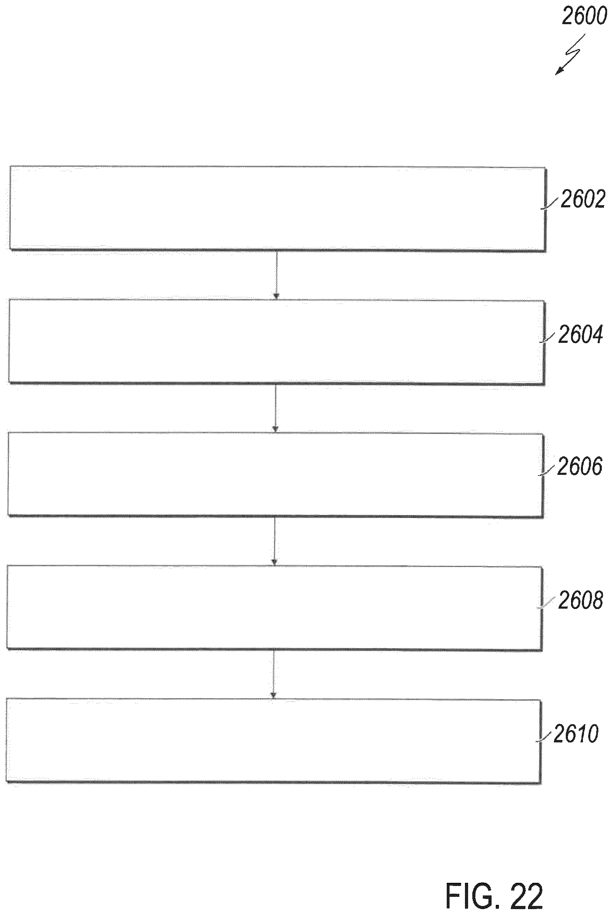

FIG. 22 is a flowchart of an example method 2600 for using behavior-based applications, according to an implementation of the present disclosure. For clarity of presentation, the description that follows generally describes method 2600 in the context of the other figures in this description (and, particularly, the description with respect to FIGS. 5A & 5B). However, it will be understood that method 2600 may be performed, for example, by any suitable system, environment, software, and hardware, or a combination of systems, environments, software, and hardware, as appropriate. In some implementations, various steps of method 2600 can be run in parallel, in combination, in loops, or in any order.

Steps 2602 to 2606 may be carried out for a behavior at design time.

At 2602, define one or more event handlers (functions) for a behavior that act upon a particular event (e.g., input from a user), given a context (e.g., UI element) the particular event will be bound to at runtime. For example, refer to the description with respect to FIGS. 5A & 5B. From 2602, method 2600 proceeds to 2604.

At 2604, the defined event handlers are configured to trigger one or more other events (e.g., connection to a database) upon detection of the particular event. From 2604, method 2600 proceeds to 2606.

At 2606, optionally, initial parameters can be provided for the event handlers. From 2606, method 2600 proceeds to 2608.

The following steps may be carried out at run time for the defined behavior:

At 2608, place the defined behavior in a particular context (e.g., UI element or an executable application). From 2608, method 2600 proceeds to 2610.

At 2610, optionally use machine learning technologies to further parameterize the behavior based on the usage. After 2610, method 2600 stops.

As a particular example, a "Draw Arrows" behavior is defined (for example, in FIGS. 18A-18C, the "Mindmapping" application 2206) to permit the addition of arrow (for example, connection 2216 in FIG. 18C). An event handler can be provided for a "left-mouse-press-down" and "left-mouse-release" events. Here, define that when a user presses down on a left mouse button ("left-mouse-press-down" event), a detection is performed if the left press was on an object (a node) in a graph. If YES, start drawing an arrow from the node by following the mouse pointer. Define that when the user releases the left mouse button ("left-mouse-release" event), a determination is made as to whether the left release was over a different node in the graph. If YES, draw the arrow and trigger a "two-nodes-connected" event in the same context. If NO, no arrow is drawn between the nodes (but some other action could be performed). The defined event handler could be optionally configured to provide parameters (for example, width, color, and pattern of the drawn arrows). The defined behavior is then placed into a graph application (for example, application 2206 in FIGS. 18A-18C). Optionally, machine learning technologies can be used to learn the ideal width, color, or pattern of the arrows based on the distance between the nodes, the amount of display real estate available for display, and the like.

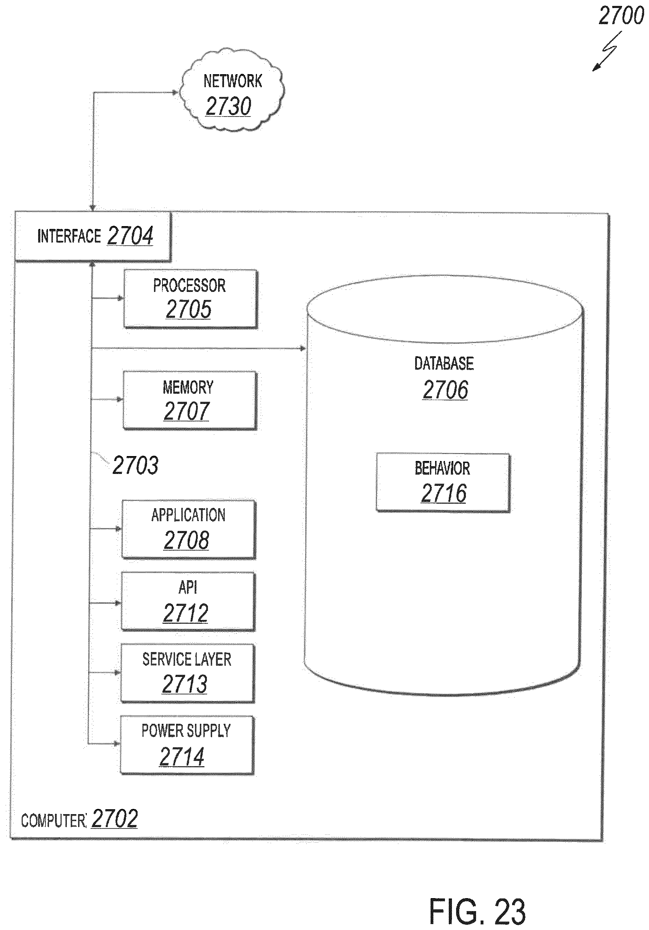

FIG. 23 is a block diagram of an example computer system 2700 used to provide computational functionalities associated with described algorithms, methods, functions, processes, flows, and procedures, as described in the instant disclosure, according to an implementation of the present disclosure. The illustrated computer 2702 is intended to encompass any computing device such as a server, desktop computer, laptop/notebook computer, wireless data port, smart phone, personal data assistant (PDA), tablet computing device, one or more processors within these devices, or any other suitable processing device, including physical or virtual instances (or both) of the computing device. Additionally, the computer 2702 may comprise a computer that includes an input device, such as a keypad, keyboard, touch screen, or other device that can accept user information, and an output device that conveys information associated with the operation of the computer 2702, including digital data, visual, or audio information (or a combination of information), or a graphical-type user interface (UI) (or GUI).

The computer 2702 can serve in a role as a client, network component, a server, a database or other persistency, or any other component (or a combination of roles) of a computer system for performing the subject matter described in the instant disclosure. The illustrated computer 2702 is communicably coupled with a network 2730. In some implementations, one or more components of the computer 2702 may be configured to operate within environments, including cloud-computing-based, local, global, or other environment (or a combination of environments).

At a high level, the computer 2702 is an electronic computing device operable to receive, transmit, process, store, or manage data and information associated with the described subject matter. According to some implementations, the computer 2702 may also include or be communicably coupled with an application server, e-mail server, web server, caching server, streaming data server, or other server (or a combination of servers).

The computer 2702 can receive requests over network 2730 from a client application (for example, executing on another computer 2702) and respond to the received requests by processing the received requests using an appropriate software application(s). In addition, requests may also be sent to the computer 2702 from internal users (for example, from a command console or by other appropriate access method), external or third-parties, other automated applications, as well as any other appropriate entities, individuals, systems, or computers.

Each of the components of the computer 2702 can communicate using a system bus 2703. In some implementations, any or all of the components of the computer 2702, hardware or software (or a combination of both hardware and software), may interface with each other or the interface 2704 (or a combination of both), over the system bus 2703 using an application programming interface (API) 2712 or a service layer 2713 (or a combination of the API 2712 and service layer 2713). The API 2712 may include specifications for routines, data structures, and object classes. The API 2712 may be either computer-language independent or dependent and refer to a complete interface, a single function, or even a set of APIs. The service layer 2713 provides software services to the computer 2702 or other components (whether or not illustrated) that are communicably coupled to the computer 2702. The functionality of the computer 2702 may be accessible for all service consumers using this service layer. Software services, such as those provided by the service layer 2713, provide reusable, defined functionalities through a defined interface. For example, the interface may be software written in JAVA, C++, or other suitable language providing data in extensible markup language (XML) format or other suitable format. While illustrated as an integrated component of the computer 2702, alternative implementations may illustrate the API 2712 or the service layer 2713 as stand-alone components in relation to other components of the computer 2702 or other components (whether or not illustrated) that are communicably coupled to the computer 2702. Moreover, any or all parts of the API 2712 or the service layer 2713 may be implemented as child or sub-modules of another software module, enterprise application, or hardware module without departing from the scope of this disclosure.

The computer 2702 includes an interface 2704. Although illustrated as a single interface 2704 in FIG. 23, two or more interfaces 2704 may be used according to particular needs, desires, or particular implementations of the computer 2702. The interface 2704 is used by the computer 2702 for communicating with other systems that are connected to the network 2730 (whether illustrated or not) in a distributed environment. Generally, the interface 2704 comprises logic encoded in software or hardware (or a combination of software and hardware) and is operable to communicate with the network 2730. More specifically, the interface 2704 may comprise software supporting one or more communication protocols associated with communications such that the network 2730 or interface's hardware is operable to communicate physical signals within and outside of the illustrated computer 2702.

The computer 2702 includes a processor 2705. Although illustrated as a single processor 2705 in FIG. 23, two or more processors may be used according to particular needs, desires, or particular implementations of the computer 2702. Generally, the processor 2705 executes instructions and manipulates data to perform the operations of the computer 2702 and any algorithms, methods, functions, processes, flows, and procedures as described in the instant disclosure.

The computer 2702 also includes a database 2706 that can hold data for the computer 2702 or other components (or a combination of both) that can be connected to the network 2730 (whether illustrated or not). For example, database 2706 can be an in-memory, conventional, or other type of database storing data consistent with this disclosure. In some implementations, database 2706 can be a combination of two or more different database types (for example, a hybrid in-memory and conventional database) according to particular needs, desires, or particular implementations of the computer 2702 and the described functionality. Although illustrated as a single database 2706 in FIG. 23, two or more databases (of the same or combination of types) can be used according to particular needs, desires, or particular implementations of the computer 2702 and the described functionality. While database 2706 is illustrated as an integral component of the computer 2702, in alternative implementations, database 2706 can be external to the computer 2702. As illustrated, the database 2706 holds a behavior 2716, as previously described. In addition, the database 2706 may include a UCLE and a ULE, as described below.

The computer 2702 also includes a memory 2707 that can hold data for the computer 2702 or other components (or a combination of both) that can be connected to the network 2730 (whether illustrated or not). Memory 2707 can store any data consistent with this disclosure. In some implementations, memory 2707 can be a combination of two or more different types of memory (for example, a combination of semiconductor and magnetic storage) according to particular needs, desires, or particular implementations of the computer 2702 and the described functionality. Although illustrated as a single memory 2707 in FIG. 23, two or more memories 2707 (of the same or combination of types) can be used according to particular needs, desires, or particular implementations of the computer 2702 and the described functionality. While memory 2707 is illustrated as an integral component of the computer 2702, in alternative implementations, memory 2707 can be external to the computer 2702.

The application 2708 is an algorithmic software engine providing functionality according to particular needs, desires, or particular implementations of the computer 2702, particularly with respect to functionality described in this disclosure. For example, application 2708 can serve as one or more components, modules, or applications. Further, although illustrated as a single application 2708, the application 2708 may be implemented as multiple applications 2708 on the computer 2702. In addition, although illustrated as integral to the computer 2702, in alternative implementations, the application 2708 can be external to the computer 2702.

The computer 2702 can also include a power supply 2714. The power supply 2714 can include a rechargeable or non-rechargeable battery that can be configured to be either user- or non-user-replaceable. In some implementations, the power supply 2714 can include power-conversion or management circuits (including recharging, standby, or other power management functionality). In some implementations, the power-supply 2714 can include a power plug to allow the computer 2702 to be plugged into a wall socket or other power source to, for example, power the computer 2702 or recharge a rechargeable battery.

There may be any number of computers 2702 associated with, or external to, a computer system containing computer 2702, each computer 2702 communicating over network 2730. Further, the term "client," "user," and other appropriate terminology may be used interchangeably, as appropriate, without departing from the scope of this disclosure. Moreover, this disclosure contemplates that many users may use one computer 2702, or that one user may use multiple computers 2702.

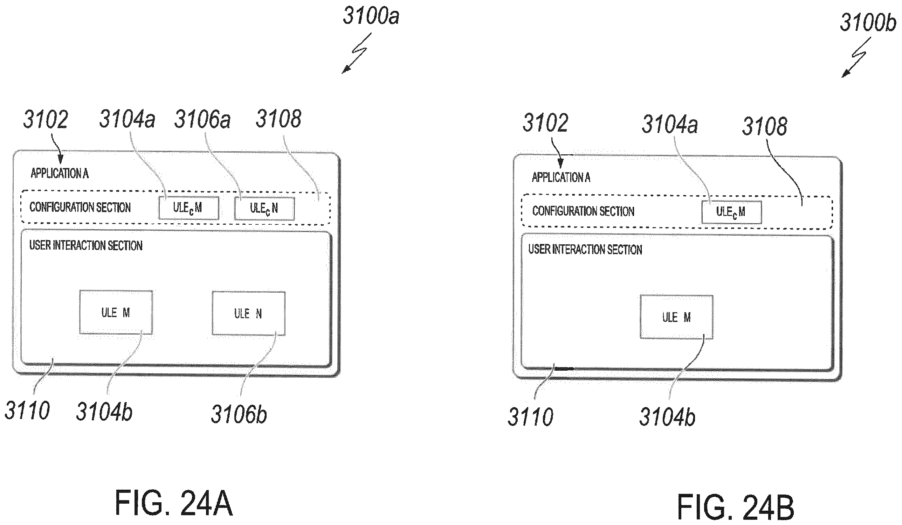

FIGS. 24A & 24B are block diagrams 3100a & 3100b, respectively, illustrating removal of a ULE from an App A, according to an implementation of the present disclosure. As illustrated in FIG. 24A, App A 3102 includes ULEs as both a ULE Configuration Element (UCE) $ULE_c$ M 3104a and $ULE_c$ N 3106a in a Configuration Section 3108 and associated ULEs ULE M 3104b and ULE N 3106b, respectively, in User Interaction Section 3110. Note, the positioning of App elements or regions and ULEs do not necessarily imply a particular screen layout or spatial arrangement. UCEs may provide a user selectable representation (for example, an icon or other UI widget) of a particular ULE that can also be interacted with in order to implement various operations (for example, copy, delete, transfer, and move) with respect to ULEs and Apps.

Turning to FIG. 24B, a user selects to remove $ULE_c$ N 3106a from the Configuration Section 3108. Following the removal of the UCE 3106a, as an effect, associated ULE N 3106b is also removed from App A 3102. Note that any objects rendered in the User Interaction Section 3110 can then change based on the removal of a particular UCE and ULE depending on the effect the ULE 3106b use logic imparted to App A 3102 (for example, removal of a ULE providing reordering functionality can result in rendered objects reverting to a non-sorted state). In some implementations, if the user decides to remove a ULE from App A 3102 (for example, ULE 3106b), the associated UCE $ULE_c$ N 3106a can remain in the configuration section 3108 to allow the user to easily re-add the ULE to App A 3102 if desired. Alternatively, the user can recover the deleted ULE N 3106b from a deleted items storage (for example, a clipboard).

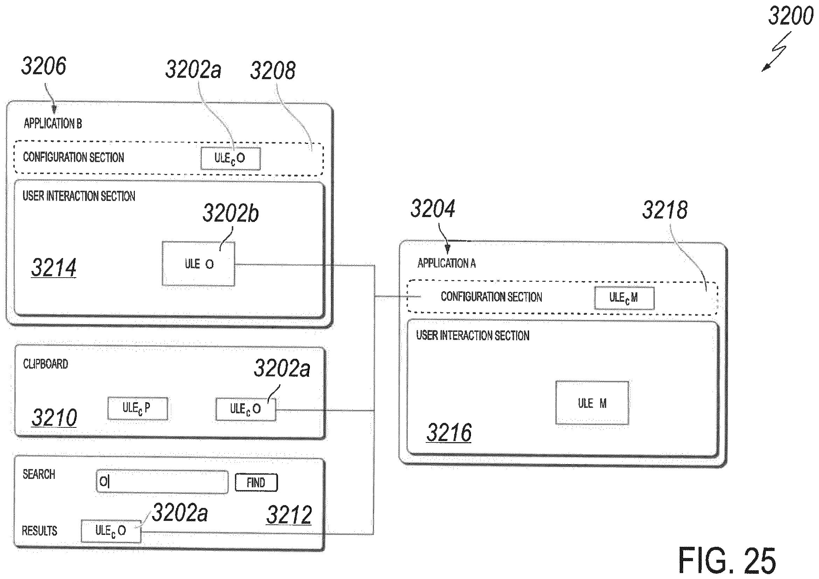

FIG. 25 is a block diagram 3200 illustrating example options for transferring a ULE to an App, according to an implementation of the present disclosure. As illustrated, $ULE_c$ O 3202a (and associated ULE O 3202b) can be transferred to App A 3204 from App B 3206 (from Configuration Section 3208), a Clipboard 3210 (which can include various UCEs), or a Search UI 3212 (which can support retrieving ULEs from a database).

As will be understood by those of ordinary skill in the art, there are many other possible applications/UI elements, other than those illustrated, that can be used to transfer UCEs and ULEs. In other implementations, not illustrated, a user could transfer a ULE directly from a User Interaction Section (for example, User Interaction Section 3214 of Application B 3206 to User Interaction Section 3216 of Application A 3204). Note that the UCE associated with the transferred ULE (for example, $ULE_c$ O 3202a would also be transferred to Configuration Section 3218 of Application A 3204). Whether or not the transfer would delete $ULE_c$ O 3202a and ULE O 3202b from Application B 3206 would depend on whether the transfer was a copy, cut-and-paste, or other type of operation.

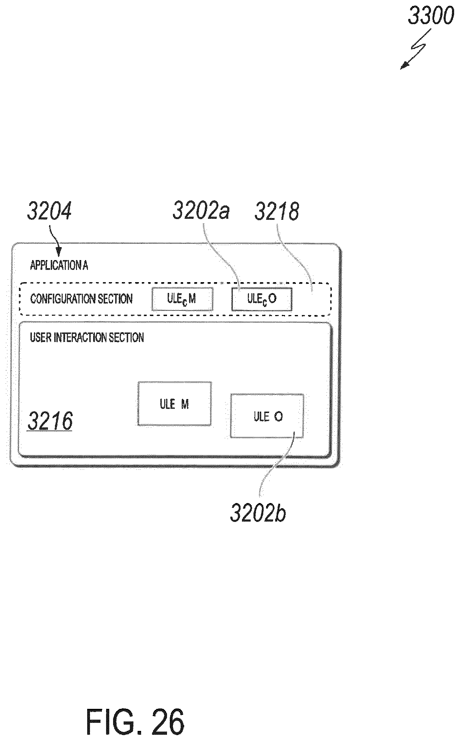

FIG. 26 is a block diagram 3300 illustrating a completed transfer of a ULE from App B to App A of FIG. 25, according to an implementation of the present disclosure. Note that FIG. 26 illustrates the transfer of ULE O 3202b and associated $ULE_c$ O 3202a to the User Interaction Section 3216 and Configuration Section 3218, respectively, of App A 3204).

In some implementations, principles of machine learning technologies (for example, machine learning algorithms, artificial intelligence engines, or pattern matching algorithms) can be applied to the concept of ULEs and the handling of ULEs at the level of user interaction, at a UI level. A practical example could focus on the transfer of objects from a source App S to a target App T, where a particular machine learning algorithm can be applied to match the rendering (for example, style, color, font, and size) of the object from App S so that it matches the ULEs of App T. Assume that in App S the object is row data within a table. The user decides to transfer (for example, by selecting and dragging the row in the UI) this data object to App T, which features ULEs for visually linking data objects. If the source data object (here, row data) has several attributes, if preserved after the transfer to App T, this fact considerably impedes interactions for users since they might not be able to link the row data on the level of the object with other objects already present in App T. Instead, users may feel that they are required to decide which attribute(s) of the row data that they want to link with another object in App T. However, a machine learning algorithm could analyze the situation and determine that the row data could be "transformed" into a unitary object that can be linked to other objects. Accordingly, limitations of having to decide for any particular attribute for the purpose of linking to other objects can be mitigated.

As another example, the knowledge gathered by machine learning technologies can be used with respect to objects associated with an App that can be affected by one or more behaviors (for example, a Sortable or Simple Visualizer Behavior). With the gathered knowledge, one or more behaviors can be parameterized for enhanced functionality. As an example, a particular behavior can be parameterized to receive the size of a list of airline data from an airline reservation website and to adjust the size of a UI widget appropriately or to display particular information deemed most important within the widget. Additionally, one or more behaviors could be optionally configured by the machine learning technologies with additional parameters (for example, in associated event handlers).

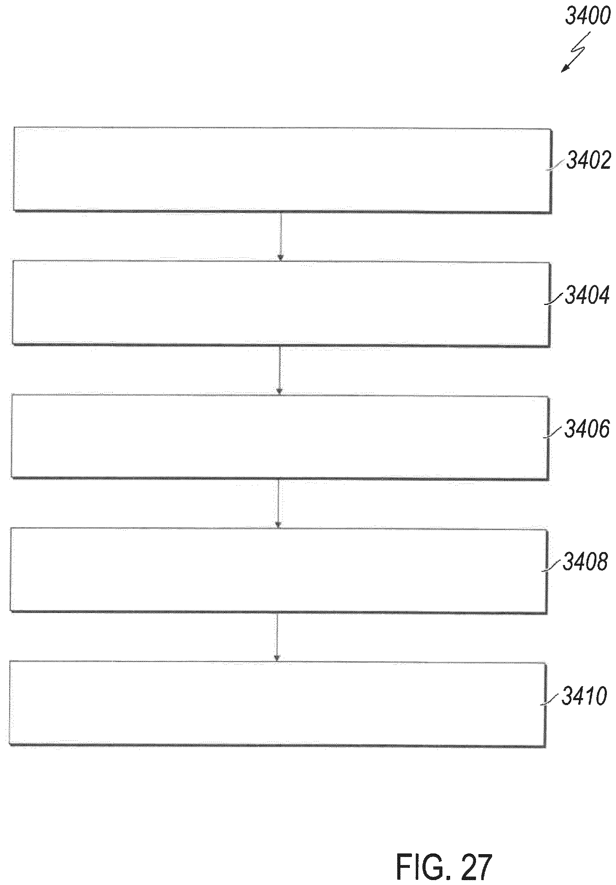

FIG. 27 is a flowchart of an example method 3400 for easy and flexible, user-directed configuration of applications during runtime, according to an implementation of the present disclosure. For clarity of presentation, the description that follows generally describes method 3400 in the context of the other figures in this description. However, it will be understood that method 3400 may be performed, for example, by any suitable system, environment, software, and hardware, or a combination of systems, environments, software, and hardware, as appropriate. In some implementations, various steps of method 3400 can be run in parallel, in combination, in loops, or in any order.

At 3402, a ULE and associated UCE are defined for a particular context (e.g., a user interface element, an executable application or multiple executable applications). From 3402, method 3400 proceeds to 3404.

At 3404, the defined ULE and associated UCE are placed into the particular context. For example, the context could be configured to initialize with a default set of ULEs/UCEs or to present available ULEs/UCEs in a particular region of the same or a different context. From 3404, method 3400 proceeds to 3406.

At 3406, the ULEs/UCEs are rendered within the particular context. From 3406, method 3400 proceeds to 3408.

At 3408, either the ULE or associated UCE is manipulated by the user using a user interface of the context (e.g., the user interface of the executable application). Events (e.g., user interface manipulation events) associated with either the ULE or the UCE are received in response to the user interface manipulation. From 3408, method 3400 proceeds to 3410.

At 3410, the particular context user interface is dynamically configured based upon the received user interface manipulation events. After 3410, method 3400 stops.

Implementations of the subject matter and the functional operations described in this specification can be implemented in digital electronic circuitry, in tangibly embodied computer software or firmware, in computer hardware, including the structures disclosed in this specification and their structural equivalents, or in combinations of one or more of them. Software implementations of the described subject matter can be implemented as one or more computer programs, that is, one or more modules of computer program instructions encoded on a tangible, non-transitory, computer-readable computer-storage medium for execution by, or to control the operation of, data processing apparatus. Alternatively, or additionally, the program instructions can be encoded in/on an artificially generated propagated signal, for example, a machine-generated electrical, optical, or electromagnetic signal that is generated to encode information for transmission to suitable receiver apparatus for execution by a data processing apparatus. The computer-storage medium can be a machine-readable storage device, a machine-readable storage substrate, a random or serial access memory device, or a combination of computer-storage mediums.

The term "real-time," "real time," "realtime," "real (fast) time (RFT)," "near(ly) real-time (NRT)," "quasi real-time," or similar terms (as understood by one of ordinary skill in the art), means that an action and a response are temporally proximate such that an individual perceives the action and the response occurring substantially simultaneously. For example, the time difference for a response to display (or for an initiation of a display) of data following the individual's action to access the data may be less than 1 ms, less than 1 sec., or less than 5 secs. While the requested data need not be displayed (or initiated for display) instantaneously, it is displayed (or initiated for display) without any intentional delay, taking into account processing limitations of a described computing system and time required to, for example, gather, accurately measure, analyze, process, store, or transmit the data.

The terms "data processing apparatus," "computer," or "electronic computer device" (or equivalent as understood by one of ordinary skill in the art) refer to data processing hardware and encompass all kinds of apparatus, devices, and machines for processing data, including by way of example, a programmable processor, a computer, or multiple processors or computers. The apparatus can also be, or further include special purpose logic circuitry, for example, a central processing unit (CPU), an FPGA (field programmable gate array), or an ASIC (application-specific integrated circuit). In some implementations, the data processing apparatus or special purpose logic circuitry (or a combination of the data processing apparatus or special purpose logic circuitry) may be hardware- or software-based (or a combination of both hardware- and software-based). The apparatus can optionally include code that creates an execution environment for computer programs, for example, code that constitutes processor firmware, a protocol stack, a database management system, an operating system, or a combination of execution environments. The present disclosure contemplates the use of data processing apparatuses with or without conventional operating systems, for example LINUX, UNIX, WINDOWS, MAC OS, ANDROID, IOS, or any other suitable conventional operating system.

A computer program, which may also be referred to or described as a program, software, a software application, a module, a software module, a script, or code can be written in any form of programming language, including compiled or interpreted languages, or declarative or procedural languages, and it can be deployed in any form, including as a stand-alone program or as a module, component, subroutine, or other unit suitable for use in a computing environment. A computer program may, but need not, correspond to a file in a file system. A program can be stored in a portion of a file that holds other programs or data, for example, one or more scripts stored in a markup language document, in a single file dedicated to the program in question, or in multiple coordinated files, for example, files that store one or more modules, sub-programs, or portions of code. A computer program can be deployed to be executed on one computer or on multiple computers that are located at one site or distributed across multiple sites and interconnected by a communication network. While portions of the programs illustrated in the various figures are shown as individual modules that implement the various features and functionality through various objects, methods, or other processes, the programs may instead include a number of sub-modules, third-party services, components, libraries, and such, as appropriate. Conversely, the features and functionality of various components can be combined into single components, as appropriate. Thresholds used to make computational determinations can be statically, dynamically, or both statically and dynamically determined.

The methods, processes, or logic flows described in this specification can be performed by one or more programmable computers executing one or more computer programs to perform functions by operating on input data and generating output. The methods, processes, or logic flows can also be performed by, and apparatus can also be implemented as, special purpose logic circuitry, for example, a CPU, an FPGA, or an ASIC.

Computers suitable for the execution of a computer program can be based on general or special purpose microprocessors, both, or any other kind of CPU. Generally, a CPU will receive instructions and data from and write to a memory. The essential elements of a computer are a CPU, for performing or executing instructions, and one or more memory devices for storing instructions and data. Generally, a computer will also include, or be operatively coupled to, receive data from or transfer data to, or both, one or more mass storage devices for storing data, for example, magnetic, magneto-optical disks, or optical disks. However, a computer need not have such devices. Moreover, a computer can be embedded in another device, for example, a mobile telephone, a personal digital assistant (PDA), a mobile audio or video player, a game console, a global positioning system (GPS) receiver, or a portable storage device, for example, a universal serial bus (USB) flash drive, to name just a few.

Computer-readable media (transitory or non-transitory, as appropriate) suitable for storing computer program instructions and data includes all forms of permanent/non-permanent or volatile/non-volatile memory, media and memory devices, including by way of example semiconductor memory devices, for example, random access memory (RAM), read-only memory (ROM), phase change memory (PRAM), static random access memory (SRAM), dynamic random access memory (DRAM), erasable programmable read-only memory (EPROM), electrically erasable programmable read-only memory (EEPROM), and flash memory devices; magnetic devices, for example, tape, cartridges, cassettes, internal/removable disks; magneto-optical disks; and optical memory devices, for example, digital video disc (DVD), CD-ROM, DVD+/-R, DVD-RAM, DVD-ROM, HD-DVD, and BLURAY, and other optical memory technologies. The memory may store various objects or data, including caches, classes, frameworks, applications, modules, backup data, jobs, web pages, web page templates, data structures, database tables, repositories storing dynamic information, and any other appropriate information including any parameters, variables, algorithms, instructions, rules, constraints, or references thereto. Additionally, the memory may include any other appropriate data, such as logs, policies, security or access data, reporting files, as well as others. The processor and the memory can be supplemented by, or incorporated in, special purpose logic circuitry.

To provide for interaction with a user, implementations of the subject matter described in this specification can be implemented on a computer having a display device, for example, a CRT (cathode ray tube), LCD (liquid crystal display), LED (Light Emitting Diode), or plasma monitor, for displaying information to the user and a keyboard and a pointing device, for example, a mouse, trackball, or trackpad by which the user can provide input to the computer. Input may also be provided to the computer using a touchscreen, such as a tablet computer surface with pressure sensitivity, a multi-touch screen using capacitive or electric sensing, or other type of touchscreen. Other kinds of devices can be used to provide for interaction with a user as well; for example, feedback provided to the user can be any form of sensory feedback, for example, visual feedback, auditory feedback, or tactile feedback; and input from the user can be received in any form, including acoustic, speech, or tactile input. In addition, a computer can interact with a user by sending documents to and receiving documents from a device that is used by the user; for example, by sending web pages to a web browser on a user's client device in response to requests received from the web browser.

The term "graphical user interface," or "GUI," may be used in the singular or the plural to describe one or more graphical user interfaces and each of the displays of a particular graphical user interface. Therefore, a GUI may represent any graphical user interface, including but not limited to, a web browser, a touch screen, or a command line interface (CLI) that processes information and efficiently presents the information results to the user. In general, a GUI may include a plurality of user interface (UI) elements, some or all associated with a web browser, such as interactive fields, pull-down lists, and buttons. These and other UI elements may be related to or represent the functions of the web browser.

Implementations of the subject matter described in this specification can be implemented in a computing system that includes a back-end component, for example, as a data server, or that includes a middleware component, for example, an application server, or that includes a front-end component, for example, a client computer having a graphical user interface or a Web browser through which a user can interact with an implementation of the subject matter described in this specification, or any combination of one or more such back-end, middleware, or front-end components. The components of the system can be interconnected by any form or medium of wireline or wireless digital data communication (or a combination of data communication), for example, a communication network. Examples of communication networks include a local area network (LAN), a radio access network (RAN), a metropolitan area network (MAN), a wide area network (WAN), Worldwide Interoperability for Microwave Access (WIMAX), a wireless local area network (WLAN) using, for example, 802.11 a/b/g/n or 802.20 (or a combination of 802.1 lx and 802.20 or other protocols consistent with this disclosure), all or a portion of the Internet, or any other communication system or systems at one or more locations (or a combination of communication networks). The network may communicate with, for example, Internet Protocol (IP) packets, Frame Relay frames, Asynchronous Transfer Mode (ATM) cells, voice, video, data, or other suitable information (or a combination of communication types) between network addresses.

The computing system can include clients and servers. A client and server are generally remote from each other and typically interact through a communication network. The relationship of client and server arises by virtue of computer programs running on the respective computers and having a client-server relationship to each other.

**Claims**

1. A system, comprising:

   a communication port (1220) to exchange information with a user via a graphical user interface;
   a merging platform (340, 1200), coupled to the communication port, including:

      a memory storing processor-executable program code, and
      a computer processor (1210) to execute the processor-executable program code in order to cause the merging platform (340,1200) to:

         receive, via the graphical user interface, a selection of a first (100) executable application,
         receive, via the graphical user interface, a selection of a second (200) executable application,
         wherein each of the executable applications includes at least one user interface element, at least one behavior corresponding to the user interface element, at least one input parameter, and at least one output parameter,
         wherein each user interface element is implemented using a user interface element class;
         wherein each corresponding behavior (2102, 2209, 2211-2212, 2308,2408, 2410, 2412) is implemented as a subclass that extends the user interface element class;
         wherein each corresponding behavior affects a voice interface, a haptic interface, a style attribute affecting display of the corresponding user interface element, or a style attribute affecting data displayed in the corresponding user interface element;
         wherein each behavior includes an identifier and one or more methods, wherein each method has a method signature and a version number;
         determine whether the applications represent a valid combination, comprising, determining whether the number of outputs of the first application falls within a range for the number of inputs accepted by the second application;
         when the applications represent a valid combination, merge components of the first (100) executable application and the second (200) executable application to create a merged application, wherein the components include the behaviors, wherein the merged application includes a union of the behaviors, such that the merged application includes the behaviors of the second application and the behaviors of the first application,

wherein, when a behavior of the second application has the same method signature and a version number greater than or equal to a version number of a behavior of the first application, the behavior of the second application overrides the behavior of the first application in the merged application; and arrange to facilitate execution of the merged application.

2. The system of claim 1, wherein the system further comprises an application data store (310, 1260) containing information about a plurality of executable applications, including input parameters and output parameters associated with each executable application;

   wherein the merging platform (340,1200) is coupled to the application data store (310, 1260);
   wherein the first (100) executable application and the second (200) executable application are in the application data store; and
   wherein at least one selection received from the user may include a graphical drag-and-drop operation of a graphical representation of an executable application into a merging display placeholder area.

3. The system of claim 1 or 2, wherein arranging to facilitate execution of the merged application includes at least one of: (i) executing the merged application via the graphical user interface; (ii) saving a copy of the merged application, and (iii) transmitting information about the merged application to enable the merged application to be executed by another user.

4. The system of any one of the preceding claims, wherein at least one of the first (100) and second (200) executable applications are associated with at least one of: (i) a searching application, (ii) a mapping application, (iii) a grouping application, (iv) a comparing application, (v) a business application, (vi) a geographic map application, (vii) an inventory application, (viii) a human resources application, (ix) a manufacturing application, (x) a form-based application, and (xi) a communication application.

5. The system of any one of the preceding claims, wherein each behavior specifies functionality applicable within a context;

   wherein the context may include one of the following: a single user interface element, a plurality of user interface elements, one of the executable applications, both of the executable applications, a dynamic web page;
   wherein the merged application may be implemented using client-side scripting and/or within a dynamic web page;
   wherein the components may include the input parameters and the output parameters.

6. The system of any one of the preceding claims,

   wherein at least one of the first (100) and second (200) executable applications was not created at design time in accordance with the merging platform (340,1200);
   wherein the merging may be a runtime operation;
   wherein the communication port may exchange information with a user through a remote user device via a distributed communication network;
   wherein an application merging application may be triggered in response to an indication form a user;
   wherein the merge of the components of the first (100) executable application and the second (200) executable application may be carried out in response to the trigger.

7. A computer-implemented method (S400), comprising:

   receiving (S410), via a graphical user interface, a selection of a first (100) executable application;
   receiving (S420), via the graphical user interface, a selection of a second (200) executable application;
   wherein each of the executable applications includes at least one user interface element, at least one behavior (2102, 2209, 2211-2212, 2308,2408, 2410,2412) corresponding to the user interface element, at least one input parameter, and at least one output parameter,
   wherein each user interface element is implemented using a user interface element class;
   wherein each corresponding behavior (2102, 2209, 2211-2212, 2308,2408, 2410, 2412) is implemented as a subclass that extends the user interface element class;
   wherein each corresponding behavior affects a voice interface, a haptic interface, a style attribute affecting display of the corresponding user interface element, or a style attribute affecting data displayed in the corresponding user interface element;

wherein each behavior includes an identifier and one or more methods, wherein each method has a method signature and a version number;

determining whether the applications represent a valid combination, comprising, determining whether the number of outputs of the first application falls within a range for the number of inputs accepted by the second application;

when (S430) the applications represent a valid combination, merging (S440) components of the first (100) executable application and the second (200) executable application to create a merged application, wherein the components include the behaviors (2102, 2209, 2211-2212, 2308,2408,2410,2412);

wherein the merged application includes a union of the behaviors, such that the merged application includes the behaviors of the second application and the behaviors of the first application,

wherein, when a behavior of the second application has the same method signature and a version number greater than or equal to a version number of a behavior of the first application, the behavior of the second application overrides the behavior of the first application in the merged application; and

arranging (S450) to facilitate execution of the merged application.

8. The method of claim 7, further comprising:

in response to an indication from a user, triggering an application merging application;

merging the components of the first (100) executable application and the second (200) executable application in response to the triggering;

wherein the first (100) executable application and/or the second (200) executable application are selected from an application data store, the application data store (310, 1260) containing information about a plurality of executable applications including input parameters and output parameters associated with each executable application;

wherein the second (200) executable application may be a merged application associated with two other executable applications;

wherein the merging may be further associated with a third executable application in the application data store.

9. The method of claim 7 or 8, wherein each behavior (2102, 2209, 2211-2212, 2308,2408,2410,2412) specifies functionality applicable within a context;

wherein the context may include one of the following: a single user interface element, a plurality of user interface elements, one of the executable applications, both of the executable applications, a dynamic web page;

wherein the merged application may be implemented using client-side scripting and/or within a dynamic web page;

wherein the components may include the input parameters and the output parameters.

10. The method of any one of claims 7 to 9, wherein at least one user interface element is a structural element, an interaction element or a control element of a graphical user interface;

wherein at least one user interface element and corresponding behavior (2102, 2209, 2211-2212, 2308,2408,2410,2412) may be implemented in a client-side dynamic web page;

wherein at least one user interface element may be an HTML element;

wherein at least one user interface element may be one of the following: a button, a menu, a window, an icon, a tab, a slider, a list box, a spinner, a menu, a menu bar, a toolbox, a combo box, a text box, a link.

11. The method of any one of claims 7 to 10, wherein each behavior (2102, 2209, 2211-2212, 2308,2408,2410,2412) includes at least one event handler (2108,2110,2116),

wherein the event handler (2108,2110,2116) is configured to listen for events triggered by user interaction with the user interface element corresponding to the behavior (2102, 2209, 2211-2212, 2308,2408,2410,2412);

wherein one of the events may be triggered by receipt of input via the corresponding user interface element, wherein completion of the user interaction that triggered the event may cause the behavior (2102, 2209, 2211-2212, 2308,2408, 2410, 2412) to connect to a database, wherein the input may include a query of the database, wherein the behavior (2102, 2209, 2211-2212, 2308,2408,2410,2412) may return a result of the query to the executable application that includes the corresponding user interface element;

wherein each behavior (2102, 2209, 2211-2212, 2308,2408,2410,2412) may include at least one helper method that is callable by the event handler (2108,2110,2116);

wherein each behavior (2102, 2209, 2211-2212, 2308,2408,2410,2412) may include one or more properties, wherein the properties may specify a state of the behavior (2102, 2209, 2211-2212, 2308,2408, 2410, 2412), wherein the properties may be parameters of the event handler (2108,2110,2116) of the behavior (2102, 2209, 2211-2212, 2308,2408, 2410, 2412).

12. The method of any one of claims 7 to 11, wherein each behavior (2102, 2209, 2211-2212, 2308,2408,2410,2412) specifies one of the following:

a subset of available fields to display in the corresponding user interface element;
an order of data to display in the corresponding user interface element;
a style attribute affecting how the corresponding user interface element is displayed, wherein the style attribute may affect a size, shape, position or layout of the corresponding user interface element;
a style attribute of data to display in the corresponding user interface element;
wherein one or both of the style attributes are HTML style attributes.

13. The method of any one of claims 7 to 12, further comprising:

receiving, from the user, a trigger to separate the merged application;
responsive to the trigger, re-creating the first (100) and second (200) executable applications;
wherein verifying that the first (100) and second (200) executable applications represent the valid combination may comprise determining whether the input parameter of the second (200) executable application matches the output parameter of the first (100) executable application; and
transmitting an error indication to the user if the first (100) and second (200) executable applications do not comprise a valid combination.

14. A computer program product comprising computer-readable instructions, which, when loaded and executed on a computer system, cause the computer system to perform operations according to the method of any one of claims 7 to 13.


**Patentansprüche**

1. System, umfassend:

einen Kommunikationsport (1220) zum Austauschen von Informationen mit einem Benutzer über eine graphische Benutzerschnittstelle;
eine Zusammenführungsplattform (340, 1200), die mit dem Kommunikationsport gekoppelt ist, umfassend:

einen Speicher, der einen Prozessor-ausführbaren Programmcode speichert, und
einen Computerprozessor (1210) zum Ausführen des Prozessor-ausführbaren Programmcodes zum Bewirken, dass die Zusammenführungsplattform (340,1200):

über die graphische Benutzerschnittstelle eine Auswahl einer ersten (100) ausführbaren Anwendung empfängt,
über die graphische Benutzerschnittstelle eine Auswahl einer zweiten (200) ausführbaren Anwendung empfängt,
wobei jede der ausführbaren Anwendungen mindestens ein Benutzerschnittstellenelement, mindestens eine Verhaltensweise entsprechend dem Benutzerschnittstellenelement, mindestens einen Eingabeparameter und mindestens einen Ausgabeparameter umfasst,
wobei jedes Benutzerschnittstellenelement unter Verwendung einer Benutzerschnittstellenelementklasse implementiert wird;
wobei jede entsprechende Verhaltensweise (2102, 2209, 2211-2212, 2308, 2408, 2410, 2412) als eine Unterklasse implementiert wird, welche die Benutzerschnittstellenelementklasse erweitert;
wobei jede entsprechende Verhaltensweise eine Stimmenschnittstelle, eine haptische Schnittstelle, ein Stilattribut, das eine Anzeige des entsprechenden Benutzerschnittstellenelements beeinflusst, oder ein Stilattribut, das Daten beeinflusst, die in dem entsprechenden Benutzerschnittstellenelement angezeigt werden, beeinflusst;

wobei jede Verhaltensweise einen Identifikator und ein oder mehrere Verfahren umfasst, wobei jedes Verfahren eine Verfahrenssignatur und eine Versionsnummer aufweist;

bestimmt, ob die Anwendungen eine gültige Kombination darstellen, umfassend das Bestimmen, ob die Anzahl von Ausgaben der ersten Anwendung innerhalb eines Bereichs für die Anzahl von Eingaben liegt, der durch die zweite Anwendung akzeptiert wird;

wenn die Anwendungen eine gültige Kombination darstellen, Bestandteile der ersten (100) ausführbaren Anwendung und der zweiten (200) ausführbaren Anwendung zusammenführt, so dass eine zusammengeführte Anwendung erzeugt wird, wobei die Bestandteile die Verhaltensweisen umfassen, wobei die zusammengeführte Anwendung eine Vereinigung der Verhaltensweisen derart umfasst, dass die zusammengeführte Anwendung die Verhaltensweisen der zweiten Anwendung und die Verhaltensweisen der ersten Anwendung umfasst,

wobei, wenn eine Verhaltensweise der zweiten Anwendung die gleiche Verfahrenssignatur und eine Versionsnummer aufweist, die größer als oder gleich eine(r) Versionsnummer einer Verhaltensweise der ersten Anwendung ist, die Verhaltensweise der zweiten Anwendung die Verhaltensweise der ersten Anwendung in der zusammengeführten Anwendung aufhebt; und

eine Erleichterung der Ausführung der zusammengeführten Anwendung ermöglicht.

2. System nach Anspruch 1, wobei das System ferner eine Anwendungsdatenbank (310, 1260) umfasst, die Informationen über eine Mehrzahl von ausführbare Anwendungen, einschließlich Eingabeparameter und Ausgabeparameter, die mit jeder ausführbaren Anwendung zusammenhängen, umfasst;

wobei die Zusammenführungsplattform (340,1200) mit der Anwendungsdatenbank (310, 1260) gekoppelt ist;

wobei die erste (100) ausführbare Anwendung und die zweite (200) ausführbare Anwendung in der Anwendungsdatenbank vorliegen; und

wobei mindestens eine Auswahl, die von dem Benutzer empfangen wird, einen graphischen Drag-and-drop-Vorgang einer graphischen Darstellung einer ausführbaren Anwendung in einen Zusammenführungsanzeige-Platzhalterbereich umfassen kann.

3. System nach Anspruch 1 oder 2, wobei das Ermöglichen einer Erleichterung der Ausführung der zusammengeführten Anwendung mindestens eines von: (i) Ausführen der zusammengeführten Anwendung über die graphische Benutzerschnittstelle; (ii) Speichern einer Kopie der zusammengeführten Anwendung, und (iii) Übertragen von Informationen über die zusammengeführte Anwendung zum Ermöglichen, dass die zusammengeführte Anwendung durch einen weiteren Benutzer ausgeführt werden kann, umfasst.

4. System nach einem der vorhergehenden Ansprüche, wobei mindestens eine der ersten (100) und der zweiten (200) ausführbaren Anwendung mit mindestens einer von: (i) einer Suchanwendung, (ii) einer Zuordnungsanwendung, (iii) einer Gruppierungsanwendung, (iv) einer Vergleichsanwendung, (v) einer Geschäftsanwendung, (vi) einer geographischen Karte-Anwendung, (vii) einer Lagerbestandsanwendung, (viii) einer Personalanwendung, (ix) einer Herstellungsanwendung, (x) einer formbasierten Anwendung und (xi) einer Kommunikationsanwendung zusammenhängt.

5. System nach einem der vorhergehenden Ansprüche, wobei jede Verhaltensweise eine Funktionalität festlegt, die innerhalb eines Kontexts anwendbar ist;

wobei der Kontext eines der Folgenden umfassen kann: ein einzelnes Benutzerschnittstellenelement, eine Mehrzahl von Benutzerschnittstellenelementen, eine der ausführbaren Anwendungen, beide ausführbaren Anwendungen, eine dynamische Webseite;

wobei die zusammengeführte Anwendung unter Verwendung eines Client-seitigen Scriptings und/oder innerhalb einer dynamischen Webseite implementiert werden kann;

wobei die Bestandteile die Eingabeparameter und die Ausgabeparameter umfassen können.

6. System nach einem der vorhergehenden Ansprüche,

wobei mindestens eine der ersten (100) und der zweiten (200) ausführbaren Anwendung nicht bei der Gestaltungszeit gemäß der Zusammenführungsplattform (340,1200) erzeugt worden ist;

wobei das Zusammenführen ein Laufzeitvorgang sein kann;

wobei der Kommunikationsport Informationen mit einem Benutzer durch eine entfernt vorliegende Benutzervorrichtung über ein Verteilkommunikationsnetzwerk austauschen kann;

wobei eine Anwendungszusammenführungsanwendung als Reaktion auf eine Angabe von einem Benutzer ausgelöst werden kann;

wobei das Zusammenführen der Bestandteile der ersten (100) ausführbaren Anwendung und der zweiten (200) ausführbaren Anwendung als Reaktion auf den Auslöser durchgeführt werden kann.

7. Computerimplementiertes Verfahren (S400), umfassend:

Empfangen (S410), über eine graphische Benutzerschnittstelle, einer Auswahl einer ersten (100) ausführbaren Anwendung;

Empfangen (S420), über die graphische Benutzerschnittstelle, einer Auswahl einer zweiten (200) ausführbaren Anwendung;

wobei jede der ausführbaren Anwendungen mindestens ein Benutzerschnittstellenelement, mindestens eine Verhaltensweise (2102, 2209, 2211-2212, 2308, 2408, 2410, 2412) entsprechend dem Benutzerschnittstellenelement, mindestens einen Eingabeparameter und mindestens einen Ausgabeparameter umfasst,

wobei jedes Benutzerschnittstellenelement unter Verwendung einer Benutzerschnittstellenelementklasse implementiert wird;

wobei jede entsprechende Verhaltensweise (2102, 2209, 2211-2212, 2308, 2408, 2410, 2412) als eine Unterklasse implementiert wird, welche die Benutzerschnittstellenelementklasse erweitert;

wobei jede entsprechende Verhaltensweise eine Stimmenschnittstelle, eine haptische Schnittstelle, ein Stilattribut, das eine Anzeige des entsprechenden Benutzerschnittstellenelements beeinflusst, oder ein Stilattribut, das Daten beeinflusst, die in dem entsprechenden Benutzerschnittstellenelement angezeigt werden, beeinflusst;

wobei jede Verhaltensweise einen Identifikator und ein oder mehrere Verfahren umfasst, wobei jedes Verfahren eine Verfahrenssignatur und eine Versionsnummer aufweist;

Bestimmen, ob die Anwendungen eine gültige Kombination darstellen, umfassend das Bestimmen, ob die Anzahl von Ausgaben der ersten Anwendung innerhalb eines Bereichs für die Anzahl von Eingaben liegt, der durch die zweite Anwendung akzeptiert wird;

wenn (S430) die Anwendungen eine gültige Kombination darstellen, Zusammenführen (S440) der Bestandteile der ersten (100) ausführbaren Anwendung und der zweiten (200) ausführbaren Anwendung zum Erzeugen einer zusammengeführten Anwendung, wobei die Bestandteile die Verhaltensweisen (2102, 2209, 2211-2212, 2308, 2408, 2410, 2412) umfassen;

wobei die zusammengeführte Anwendung eine Vereinigung der Verhaltensweisen derart umfasst, dass die zusammengeführte Anwendung die Verhaltensweisen der zweiten Anwendung und die Verhaltensweisen der ersten Anwendung umfasst,

wobei, wenn eine Verhaltensweise der zweiten Anwendung die gleiche Verfahrenssignatur und eine Versionsnummer aufweist, die größer als oder gleich eine(r) Versionsnummer einer Verhaltensweise der ersten Anwendung ist, die Verhaltensweise der zweiten Anwendung die Verhaltensweise der ersten Anwendung in der zusammengeführten Anwendung aufhebt; und

Ermöglichen (S450) einer Erleichterung der Ausführung der zusammengeführten Anwendung.

8. Verfahren nach Anspruch 7, ferner umfassend:

als Reaktion auf eine Angabe von einem Benutzer, Auslösen einer Anwendungszusammenführungsanwendung;

Zusammenführen der Bestandteile der ersten (100) ausführbaren Anwendung und der zweiten (200) ausführbaren Anwendung als Reaktion auf das Auslösen;

wobei die erste (100) ausführbare Anwendung und/oder die zweite (200) ausführbare Anwendung aus einer Anwendungsdatenbank ausgewählt wird oder werden, wobei die Anwendungsdatenbank (310, 1260) Informationen über eine Mehrzahl von ausführbaren Anwendungen, einschließlich Eingabeparameter und Ausgabeparameter, die mit jeder ausführbaren Anwendung zusammenhängen, umfasst;

wobei die zweite (200) ausführbare Anwendung eine zusammengeführte Anwendung sein kann, die mit zwei weiteren ausführbaren Anwendungen zusammenhängt;

wobei das Zusammenführen ferner mit einer dritten ausführbaren Anwendung in der Anwendungsdatenbank zusammenhängen kann.

9. Verfahren nach Anspruch 7 oder 8, wobei jede Verhaltensweise (2102, 2209, 2211-2212, 2308, 2408, 2410, 2412) eine Funktionalität festlegt, die innerhalb eines Kontexts anwendbar ist;

wobei der Kontext eines der Folgenden umfassen kann: ein einzelnes Benutzerschnittstellenelement, eine Mehrzahl von Benutzerschnittstellenelementen, eine der ausführbaren Anwendungen, beide ausführbaren Anwendungen, eine dynamische Webseite;

wobei die zusammengeführte Anwendung unter Verwendung eines Client-seitigen Scriptings und/oder innerhalb einer dynamischen Webseite implementiert werden kann;

wobei die Bestandteile die Eingabeparameter und die Ausgabeparameter umfassen können.

10. Verfahren nach einem der Ansprüche 7 bis 9, wobei mindestens ein Benutzerschnittstellenelement ein Strukturelement, ein Interaktionselement oder ein Steuerelement einer graphischen Benutzerschnittstelle ist;

wobei mindestens ein Benutzerschnittstellenelement und eine entsprechende Verhaltensweise (2102, 2209, 2211-2212, 2308, 2408, 2410, 2412) in einer Client-seitigen dynamischen Webseite implementiert werden können;

wobei mindestens ein Benutzerschnittstellenelement ein HTML-Element sein kann;

wobei mindestens ein Benutzerschnittstellenelement eines der Folgenden sein kann: ein(e) Schaltfläche bzw. Button, ein Menü, ein Fenster, ein Icon, ein Tab, ein Slider, eine Listenbox, ein Spinner, ein Menü, eine Menüleiste, eine Toolbox, eine Combobox, eine Textbox, eine Verknüpfung.

11. Verfahren nach einem der Ansprüche 7 bis 10, wobei jede Verhaltensweise (2102, 2209, 2211-2212, 2308, 2408, 2410, 2412) mindestens ein Ereignis-Steuerungsprogramm (2108, 2110, 2116) umfasst,

wobei das Ereignis-Steuerungsprogramm (2108, 2110, 2116) zum Empfangen von Ereignissen ausgebildet ist, die durch eine Benutzerinteraktion mit dem Benutzerschnittstellenelement entsprechend der Verhaltensweise (2102, 2209, 2211-2212, 2308, 2408, 2410, 2412) ausgelöst werden;

wobei eines der Ereignisse durch Empfangen einer Eingabe über das entsprechende Benutzerschnittstellenelement ausgelöst werden kann, wobei der Abschluss der Benutzerinteraktion, der durch das Ereignis ausgelöst wird, bewirken kann, dass die Verhaltensweise (2102, 2209, 2211-2212, 2308, 2408, 2410, 2412) mit einer Datenbank verbunden wird, wobei die Eingabe eine Abfrage der Datenbank umfassen kann, wobei die Verhaltensweise (2102, 2209, 2211-2212, 2308, 2408, 2410, 2412) ein Ergebnis der Abfrage zu der ausführbaren Anwendung zurückführen kann, die das entsprechende Benutzerschnittstellenelement umfasst;

wobei jede Verhaltensweise (2102, 2209, 2211-2212, 2308, 2408, 2410, 2412) mindestens ein Unterstützerverfahren umfassen kann, das durch das Ereignis-Steuerungsprogramm (2108, 2110, 2116) aufrufbar ist;

wobei jede Verhaltensweise (2102, 2209, 2211-2212, 2308, 2408, 2410, 2412) eine oder mehrere Eigenschaft(en) umfassen kann, wobei die Eigenschaften einen Zustand der Verhaltensweise (2102, 2209, 2211-2212, 2308, 2408, 2410, 2412) festlegen können, wobei die Eigenschaften Parameter des Ereignis-Steuerungsprogramms (2108, 2110, 2116) der Verhaltensweise (2102, 2209, 2211-2212, 2308, 2408, 2410, 2412) sein können.

12. Verfahren nach einem der Ansprüche 7 bis 11, wobei jede Verhaltensweise (2102, 2209, 2211-2212, 2308, 2408, 2410, 2412) eines der Folgenden festlegt:

einen Teilsatz von verfügbaren Feldern zum Anzeigen in dem entsprechenden Benutzerschnittstellenelement;

eine Reihenfolge von Daten zum Anzeigen in dem entsprechenden Benutzerschnittstellenelement;

ein Stilattribut, das beeinflusst, wie das entsprechende Benutzerschnittstellenelement angezeigt wird, wobei das Stilattribut eine Größe, eine Form, eine Position oder ein Layout des entsprechenden Benutzerschnittstellenelements beeinflussen kann;

ein Stilattribut von Daten zum Anzeigen in dem entsprechenden Benutzerschnittstellenelement;

wobei es sich bei einem oder beiden der Stilattribute um HTML-Stilattribute handelt.

13. Verfahren nach einem der Ansprüche 7 bis 12, ferner umfassend:

Empfangen, von dem Benutzer, eines Auslösers zum Trennen der zusammengeführten Anwendung;

als Reaktion auf den Auslöser, erneutes Erzeugen der ersten (100) und der zweiten (200) ausführbaren Anwendung;

wobei das Verifizieren, dass die erste (100) und die zweite (200) ausführbare Anwendung die gültige Kombination darstellen, das Bestimmen umfassen kann, ob der Eingabeparameter der zweiten (200) ausführbaren Anwendung mit dem Ausgabeparameter der ersten (100) ausführbaren Anwendung übereinstimmt; und

Übertragen einer Fehlerangabe zu dem Benutzer, wenn die erste (100) und die zweite (200) ausführbare Anwendung keine gültige Kombination umfassen.

14. Computerprogrammprodukt, das computerlesbare Anweisungen umfasst, die, wenn sie auf ein Computersystem geladen und dort ausgeführt werden, bewirken, dass das Computersystem Vorgänge gemäß dem Verfahren nach einem der Ansprüche 7 bis 13 ausführt.

**Revendications**

1. Système comprenant :
   un port de communication (1220) pour échanger des informations avec un utilisateur

   par l'intermédiaire d'une interface utilisateur graphique ;
   une plateforme de fusion (340, 1200) couplée au port de communication, comportant :

   une mémoire stockant un code de programme exécutable par un processeur, et
   un processeur d'ordinateur (1210) pour exécuter le code de programme exécutable par un processeur pour amener la plateforme de fusion (340, 1200) à :

   recevoir, par l'intermédiaire de l'interface utilisateur graphique, une sélection d'une première application (100) exécutable,
   recevoir, par l'intermédiaire de l'interface utilisateur graphique, une sélection d'une deuxième application (200) exécutable,
   dans lequel chacune des applications exécutables comporte au moins un élément d'interface utilisateur, au moins un comportement correspondant à l'élément d'interface utilisateur, au moins un paramètre d'entrée, et au moins un paramètre de sortie,
   dans lequel chaque élément d'interface utilisateur est mis en oeuvre en utilisant une classe d'éléments d'interface utilisateur ;
   dans lequel chaque comportement (2102, 2209, 2211-2212, 2308, 2408, 2410, 2412) correspondant est mis en oeuvre en tant qu'une sous-classe qui étend la classe d'éléments d'interface utilisateur ;
   dans lequel chaque comportement correspondant affecte une interface de voie, une interface haptique, un attribut de style affectant l'affichage de l'élément d'interface utilisateur correspondant, ou un attribut de style affectant des données affichées dans l'élément d'interface utilisateur correspondant ;
   dans lequel chaque comportement comporte un identifiant et un ou plusieurs procédés, dans lequel chaque procédé présente une signature de procédé et un numéro de version ;
   déterminer si les applications représentent une combinaison valide, comprenant, la détermination pour savoir si le nombre de sorties de la première application relève d'une plage pour le nombre d'entrées accepté par la deuxième application ;
   lorsque les applications représentent une combinaison valide, fusionner des composants de la première application (100) exécutable et de la deuxième application (200) exécutable pour créer une application fusionnée, dans lequel les composants comportent les comportements, dans lequel l'application fusionnée comporte une union des comportements de telle sorte que l'application fusionnée comporte les comportements de la deuxième application et les comportements de la première application,

   dans lequel, lorsqu'un comportement de la deuxième application présente la même signature de procédé et un numéro de version supérieur ou égal à un numéro de version d'un comportement de la première application, le comportement de la deuxième application écrase le comportement de la première application dans l'application fusionnée ; et
   agencer pour faciliter l'exécution de l'application fusionnée.

2. Système selon la revendication 1, dans lequel le système comprend en outre une banque de données d'applications (310, 1260) contenant des informations sur une pluralité d'applications exécutables, comportant des paramètres d'entrée et des paramètres de sortie associés à chaque application exécutable ;

   dans lequel la plateforme de fusion (340, 1200) est couplée à la banque de données d'applications (310, 1260) ;
   dans lequel la première application (100) exécutable et la deuxième application (200) exécutable sont dans la banque de données d'applications ; et
   dans lequel au moins une sélection reçue de l'utilisateur peut comporter une opération graphique de glisser-déposer d'une représentation graphique d'une application exécutable dans une zone d'espace réservé d'affichage de fusion.

3. Système selon la revendication 1 ou 2, dans lequel l'agencement pour faciliter l'exécution de l'application fusionnée comporte au moins une de : (i) l'exécution de l'application fusionnée par l'intermédiaire de l'interface utilisateur graphique ; (ii) la sauvegarde d'une copie de l'application fusionnée ; et (iii) la transmission d'informations sur l'application fusionnée pour permettre l'exécution de l'application fusionnée par un autre utilisateur.

4. Système selon l'une quelconque des revendications précédentes, dans lequel au moins une de la première (100) et de la deuxième application (200) exécutable est associée à au moins une de : (i) une application de recherche, (ii) une application de mappage, (iii) une application de groupement, (iv) une application de comparaison, (v) une application commerciale, (vi) une application de carte géographique, (vii) une application d'inventaire, (viii) une application de ressources humaines, (ix) une application de fabrication, (x) une application basée sur un formulaire, et (xi) une application de communication.

5. Système selon l'une quelconque des revendications précédentes, dans lequel chaque comportement spécifie une fonctionnalité applicable dans un contexte ;

dans lequel le contexte peut comporter un des éléments suivants : un élément unique d'interface utilisateur, une pluralité d'éléments d'interface utilisateur, une des applications exécutables, les deux applications exécutables, une page Web dynamique ;
dans lequel l'application fusionnée peut être mise en oeuvre en utilisant un script côté client et/ou dans une page Web dynamique ;
dans lequel les composants peuvent comporter les paramètres d'entrée et les paramètres de sortie.

6. Système selon l'une quelconque des revendications précédentes,

dans lequel au moins une de la première (100) et de la deuxième application exécutable (200) n'a pas été créée au moment de la conception conformément à la plateforme de fusion (340, 1200) ;
dans lequel la fusion peut être une opération d'exécution ;
dans lequel le port de communication peut échanger des informations avec un utilisateur par un dispositif utilisateur à distance par l'intermédiaire d'un réseau de communication distribué ;
dans lequel une application de fusion d'applications peut être déclenchée en réponse à une indication provenant d'un utilisateur ;
dans lequel la fusion des composants de la première application exécutable (100) et de la deuxième application exécutable (200) peut être réalisée en réponse au déclenchement.

7. Procédé mis en oeuvre par un ordinateur (S400), comprenant :

la réception (S410), par l'intermédiaire d'une interface utilisateur graphique, d'une sélection d'une première application exécutable (100) ;
la réception (S400), par l'intermédiaire d'une interface utilisateur graphique, d'une sélection d'une deuxième application exécutable (200) ;
dans lequel chacune des applications exécutables comporte au moins un élément d'interface utilisateur, au moins un comportement (2102, 2209, 2211-2212, 2308, 2408, 2410, 2412) correspondant à l'élément d'interface utilisateur, au moins un paramètre d'entrée, et au moins un paramètre de sortie,
dans lequel chaque élément d'interface utilisateur est mis en oeuvre en utilisant une classe d'éléments d'interface utilisateur ;
dans lequel chaque comportement (2102, 2209, 2211-2212, 2308, 2408, 2410, 2412) correspondant est mis en oeuvre en tant qu'une sous-classe qui étend la classe d'éléments d'interface utilisateur ;
dans lequel chaque comportement correspondant affecte une interface de voix, une interface haptique, un attribut de style affectant l'affichage de l'élément d'interface utilisateur correspondant, ou un attribut de style affectant des données affichées dans l'élément d'interface d'utilisateur correspondant ;
dans lequel chaque comportement comporte un identifiant et un ou plusieurs procédés, dans lequel chaque méthode présente une signature de procédé et un numéro de version ;
la détermination pour savoir si les applications représentent une combinaison valide, comprenant, la détermination pour savoir si le nombre de sorties de la première application relève d'une plage pour le nombre d'entrées accepté par la deuxième application ;

- - lorsque (S430) les applications représentent une combinaison valide, la fusion (S440) des composants de la première application exécutable (100) et de la deuxième application exécutable (200) pour créer une application fusionnée, dans lequel les composants comportent les comportements (2102, 2209, 2211-2212, 2308, 2408, 2410, 2412) ;

dans lequel l'application fusionnée comporte une union des comportements de telle sorte que l'application fusionnée comporte les comportements de la deuxième application et les comportements de la première application,

dans lequel, lorsqu'un comportement de la deuxième application présente la même signature de procédé et un numéro de version supérieur ou égal à un numéro de version d'un comportement de la première application, le comportement de la deuxième application écrase le comportement de la première application dans l'application fusionnée ; et

l'agencement (S450) pour faciliter l'exécution de l'application fusionnée.

8. Procédé selon la revendication 7, comprenant en outre :

en réponse à une indication provenant d'un utilisateur, le déclenchement d'une application de fusion d'applications ;

la fusion des composants de la première application exécutable (100) et de la deuxième application exécutable (200) en réponse au déclenchement ;

dans lequel la première application exécutable (100) et/ou la deuxième application exécutable (200) sont choisies parmi une banque de données d'applications, la banque de données d'applications (310, 1260) contenant des informations sur une pluralité d'applications exécutables comportant des paramètres d'entrée et des paramètres de sortie associés à chaque application exécutable ;

dans lequel la deuxième application exécutable (200) peut être une application fusionnée associée à deux autres applications exécutables ;

dans lequel la fusion peut être en outre associée à une troisième application exécutable dans la banque de données d'applications.

9. Procédé selon la revendication 7 ou 8, dans lequel chaque comportement (2102, 2209, 2211-2212, 2308, 2408, 2410, 2412) spécifie la fonctionnalité applicable dans un contexte ;

dans lequel le contexte peut comporter un des éléments suivants : un élément unique d'interface utilisateur, une pluralité d'éléments d'interface utilisateur, un des applications exécutables, les deux applications exécutables, une page Web dynamique ;

dans lequel l'application fusionnée peut être mise en oeuvre en utilisant un script côté client et/ou dans une page Web dynamique ;

dans lequel les composants peuvent comporter les paramètres d'entrée et les paramètres de sortie.

10. Procédé selon l'une quelconque des revendications 7 à 9, dans lequel au moins un élément d'interface utilisateur est un élément structurel, un élément d'interaction ou un élément de commande d'une interface utilisateur graphique ;

dans lequel au moins un élément d'interface utilisateur et un comportement correspondant (2102, 2209, 2211-2212, 2308, 2408, 2410, 2412) peuvent être mis en oeuvre dans une page Web dynamique côté client ;

dans lequel au moins un élément d'interface utilisateur peut être un élément HTML ;

dans lequel au moins un élément d'interface utilisateur peut être un des éléments suivants : un bouton, un menu, une fenêtre, une icône, un onglet, un curseur, une boîte à liste, un dispositif de rotation, un menu, une barre de menu, une boîte à outils, une boîte combinée, une boîte à texte, un lien.

11. Procédé selon l'une quelconque des revendications 7 à 10, dans lequel chaque comportement (2102, 2209, 2211-2212, 2308, 2408, 2410, 2412) comporte au moins un gestionnaire d'événements (2108, 2110, 2116),

dans lequel le gestionnaire d'événements (2108, 2110, 2116) est configuré pour écouter des événements déclenchés par l'interaction d'utilisateur avec un élément d'interface utilisateur correspondant au comportement (2102, 2209, 2211-2212, 2308, 2408, 2410, 2412) ;

dans lequel un des événements peut être déclenché par la réception d'une entrée par l'intermédiaire de l'élément d'interface utilisateur correspondant, dans lequel l'achèvement de l'interaction d'utilisateur qui a déclenché l'événement peut amener le comportement (2102, 2209, 2211-2212, 2308, 2408, 2410, 2412) à se connecter à une base de données, dans lequel l'entrée peut comporter une interrogation de la base de données, dans lequel le comportement (2102, 2209, 2211-2212, 2308, 2408, 2410, 2412) peut renvoyer un résultat de l'interrogation à l'application exécutable qui comporte l'élément d'interface utilisateur correspondant ;

dans lequel chaque comportement (2102, 2209, 2211-2212, 2308, 2408, 2410, 2412) peut comporter au moins un procédé d'aide qui peut être appelé par le gestionnaire d'événements (2108, 2110, 2116) ;

dans lequel chaque comportement (2102, 2209, 2211-2212, 2308, 2408, 2410, 2412) peut comporter une ou plusieurs propriétés, dans lequel les propriétés peuvent spécifier un état du comportement (2102, 2209, 2211-2212, 2308, 2408, 2410, 2412), dans lequel les propriétés peuvent être des paramètres du gestionnaire d'événements (2108, 2110, 2116) du comportement (2102, 2209, 2211-2212, 2308, 2408, 2410, 2412).

12. Procédé selon l'une quelconque des revendications 7 à 11, dans lequel chaque comportement (2102, 2209, 2211-2212, 2308, 2408, 2410, 2412) spécifie un des éléments suivants :

un sous-ensemble de champs disponibles à afficher dans l'élément d'interface utilisateur correspondant ;
un ordre de données à afficher dans l'élément d'interface utilisateur correspondant ;
un attribut de style affectant la manière avec laquelle l'élément d'interface utilisateur correspondant est affiché, dans lequel l'attribut de style peut affecter une taille, une forme, une position ou une disposition de l'élément d'interface utilisateur correspondant ;
un attribut de style de données à afficher dans l'élément d'interface utilisateur correspondant ;
dans lequel l'un des attributs de style ou les deux sont des attributs de style HTML.

13. Procédé selon l'une quelconque des revendications 7 à 12, comprenant en outre :

la réception, de l'utilisateur, d'un déclencheur pour séparer l'application fusionnée ;
en réponse au déclencheur, la recréation des première (100) et deuxième (200) applications exécutables ;
dans lequel la vérification que les première (100) et deuxième (200) applications exécutables représentent la combinaison valide peut comprendre la détermination pour savoir si le paramètre d'entrée de la deuxième application exécutable (200) correspond au paramètre de sortie de la première application exécutable (100) ; et
la transmission d'une indication d'erreur à l'utilisateur si les première (100) et deuxième (200) applications exécutables ne comprennent pas de combinaison valide.

14. Produit de programme informatique comprenant des instructions lisibles par ordinateur qui, lorsqu'elles sont chargées et exécutées sur un système informatique, amènent le système informatique à effectuer des opérations selon le procédé selon l'une quelconque des revendications 7 à 13.

100

SEARCHING APPLICATION ⬜ · ⬜ ✕

← ⇨ ⟳ 🏠 🔍 💼 📖 🕐 🖨 ✈ ?/!

SEARCHING APPLICATION ▽

# SEARCHING APPLICATION

### SEARCHING PORTION

SEARCH TERM ONE: | DATE BEFORE 01-01-2018 | ⌐112

⌐114

| OR | ▽ | SEARCH TERM TWO: | |

116⌐

( SEARCH ) 150 **110**

### RESULTS PORTION **120**

⌐122

| ITEM 1 | | ITEM 4 |

| ITEM 2 | | ITEM 5 |

| ITEM 3 | | 124⌐ ( SORT OPTIONS ) |

## FIG. 1

200

MAPPING APPLICATION      - ☐ ✕

MAPPING APPLICATION ▽

# MAPPING APPLICATION

230

234

ITEM
B

ITEM
C

232

ITEM
A

ITEM
D

250

236

ＡＤＤ ＩＴＥＭ

FIG. 2

FIG. 3

EP 3 435 228 B1

FIG. 4

FIG. 5

FIG. 6

EP 3 435 228 B1

FIG. 7

EP 3 435 228 B1

800

MERGING PLATFORM — □ × 

← ⇒ ⟳ ⌂ 🔍 💼 📖 🕐 🖨 ✈ ?/!

MERGING PLATFORM ▽

**MERGING PLATFORM:** SEARCHING-MAPPING APPLICATION ⎤—860

SEARCHING PORTION

⌐812
SEARCH TERM ONE: │ DATE BEFORE 01-01-2018 │

⌐814
│ AND ▽ │ SEARCH TERM TWO: │ │

816
⟨ SEARCH ⟩ ⌐850
810

MAPPING PORTION

⌐832
ITEM 3    ITEM 5

ITEM 1    ➕

ADD ITEM

ITEM 2    ITEM 4

830

FIG. 8

900

FIG. 9

1000

**MERGING PLATFORM** — ⬚ ×

← ⇨ ⟳ ⌂ 🔍 💼 📖 🕐 🖨 ✈ ?/!

**MERGING PLATFORM** ▽

**MERGING PLATFORM:** SEARCHING-MAPPING APPLICATION

SEARCHING PORTION

1012

SEARCH TERM ONE: | DATE BEFORE 01-01-2018

1014

AND ▽   SEARCH TERM TWO: | SIZE < 15.0 Mb

1016

SEARCH

1010

MAPPING PORTION

ITEM 1 — ITEM 3 — ITEM 2

ITEM 5

ITEM 4

✚ ADD ITEM

1030

FIG. 10

1100

**MERGING PLATFORM** — ☐ ☒

⇐ ⇒ ⬨ ⌂ 🔍 💼 📖 🕐 🖨 ✈ ?/!

**MERGING PLATFORM** ▽

**MERGING PLATFORM:** SEARCHING-MAPPING APPLICATION

**SEARCHING PORTION**

SEARCH TERM ONE: DATE BEFORE 01-01-2018

AND ▽  SEARCH TERM TWO: SIZE < 15.0 Mb

SEARCH

<u>1110</u>

**MAPPING PORTION**

1132

ITEM 1

ITEM 2

ITEM 5

ITEM 4

ADD ITEM

<u>1130</u>

FIG. 11

1200

INPUT DEVICE 1240

COMMUNICATION DEVICE 1220

OUTPUT DEVICE 1250

PROCESSOR 1210

1230

PROGRAM 1215

APPLICATION DATA STORE 1260

MERGING DATABASE 1300

FIG. 12

1300

| MERGED APPLICATION IDENTIFIER 1302 | COMPONENT EXECUTABLE APPLICATION IDENTIFIERS 1304 | DATE AND TIME OF MERGE TRIGGER 1306 | MERGED NAME 1308 | VALID COMBINATION STATUS 1310 |
|---|---|---|---|---|
| M_101 | A_101; A_102 | 03 JAN 2019 (15:43:00) | SEARCHING-MAPPING (AUTOMATIC) | VALID |
| M_102 | A_101; A_103 | 03 JAN 2019 (09:14:00) | JOHN'S TEMP (MANUAL) | ERROR |
| M_103 | A_104, A_105; A_106 | 12 JAN 2019 (11:23:00) | SORTING-GROUPING-COMMUNICATION (AUTOMATIC) | VALID |

FIG. 13

FIG. 14

1500

S1510

Trigger Merger Of Two Applications

S1520

Check For Valid Combination

S1530

Select Inputs And Outputs

S1540

Transfer Behaviors As Appropriate

S1550

Output Resulting Merged Application And
Suggested Name

FIG. 15

FIG. 16

FIG. 17

FIG. 18A

EP 3 435 228 B1

FIG. 18B

EP 3 435 228 B1

FIG. 18C

EP 3 435 228 B1

2300

BEHAVIOR LIBRARY  *2302*

PARAMETERS  *2304*

INTERACTIONS  *2306*

SIMPLE VISUALIZER  *2308a*

PARAMETERS

INTERACTIONS

o  o  o

INSTANTIATED BEHAVIOR  *2308n*

PARAMETERS

INTERACTIONS

FIG. 19

EP 3 435 228 B1

2400

APPLICATION 1 2404

BEHAVIOR I

BEHAVIOR J

APPLICATION 2 2406

BEHAVIOR K

BEHAVIOR K 2412

BEHAVIOR M 2408

BEHAVIOR N 2410

2414

FIG. 20

2500a

⌄🗀 TUTORIAL
  ⌄🗀 01 - JUSTIFICATION
      🗈 01 - PROBLEMS WITH COMPONENTS.MP4
      🗈 02 - PROBLEMS WITH CLASS BEHAVIOURS.MP4
      🗈 03 - PROBLEMS WITH DIRECTIVES.MP4
      🗈 04 - PROBLEMS WITH DYNAMICALLY BOUND DIRECTIVES.MP4
      🗈 EXAMPLE-BEHAVIOURS.HTML
      🗈 EXAMPLE-COMPONENTS.HTML
      🗈 EXAMPLE-DIRECTIVES.HTML
  ⌄🗀 02 - COMPONENT-BASED BEHAVIOURS
      🗈 EXAMPLE-COMPONENT-BASED-BEHAVIOURS.HTML

2501

FIG. 21A

EXAMPLE-BEHAVIORS.HTML    TELEMETRY CONSENT    EXAMPLE-COMPONENTS.HTML    EXAMPLE-DIRECTIVES.HTML    EXAMPLE-COMPONENT-BASED-BEHAVIORS.HTML

```
    <p>
        Do you accept?
    </p>

    <p>
        <highlightable-behaviour color = "red"></highlightable-behaviour>    } 2502
        Blinky
    </p>


</body>

<script>

    /** Controller **/
    class highlightable extends HTMLButtonElement    ← 2504
    {
       attachedCallback()
       {
            let element = this.parentNode
            let color = this.getAttribute('color')

            element.addEventListener('mouseenter', e => element.style['color'] = color) }
            element.addEventListener('mouseleave', e => element.style['color'] = ' ')   } 2508
       }
    }
    document.registerElement("highlightable-behaviour", Highlightable)    ← 2506
</script>
</html>
```

FIG. 21B

2500c

AN EXAMPLE OF A WEB PAGE WITH A FORM

○ ○ ○

DO YOU ACCEPT?      2510

BLINKY

| ACCEPT |

ANOTHER FORM...

| ACCEPT |

IMPORTANT PARAGRAPH

| ☐ ⬚ ELEMENTS | CONSOLE | SOURCE | NETWORK | TIMELINE | PROFILES | APPLICATION | SECURITY | AUDITS |

⊘ ▽ TOP ⌄ ☐ PRESERVE LOG

＞

FIG. 21C

2600

2602

2604

2606

2608

2610

FIG. 22

_2700_

NETWORK
_2730_

INTERFACE _2704_

PROCESSOR
_2705_

MEMORY
_2707_

_2703_

APPLICATION
_2708_

API
_2712_

SERVICE LAYER
_2713_

POWER SUPPLY
_2714_

DATABASE
_2706_

BEHAVIOR
_2716_

COMPUTER _2702_

FIG. 23

EP 3 435 228 B1

*3100a*

*3102* *3104a* *3106a* *3108*

APPLICATION A

CONFIGURATION SECTION | ULE$_c$ M | ULE$_c$ N

USER INTERACTION SECTION

ULE M

ULE N

*3110* *3104b* *3106b*

**FIG. 24A**

*3100b*

*3102* *3104a* *3108*

APPLICATION A

CONFIGURATION SECTION | ULE$_c$ M

USER INTERACTION SECTION

ULE M

*3110* *3104b*

**FIG. 24B**

FIG. 25

*3300*

*3204*    *3202a*  *3218*

APPLICATION A

CONFIGURATION SECTION    ULE$_c$ M    ULE$_c$ O

USER INTERACTION SECTION

*3216*    ULE M    ULE O

*3202b*

FIG. 26

*3400*

*3402*

*3404*

*3406*

*3408*

*3410*

FIG. 27

**EP 3 435 228 B1**

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description

- US 20140026095 A, Dreiling
- US 2012317590 A, Chae
- US 2010223594 A, Kartavov